# FASCICULE DE BREVET EUROPEEN

(11) **EP 4 453 041 B1**
(45) Date de publication et mention de la délivrance du brevet: **17.12.2025**
(21) Numéro de dépôt: 22840090.9
(22) Date de dépôt: 19.12.2022
(51) Int. Cl.: C08C 19/20, B60C 1/00, C08K 3/36

(54) **POLYMÈRE PORTANT DES GROUPES PENDANTS FONCTIONNELS PARTICULIERS ÉPOXY**
POLYMER MIT SPEZIELLEN EPOXYFUNKTIONELLEN SEITENGRUPPEN
POLYMER CARRYING SPECIFIC EPOXY FUNCTIONAL PENDANT GROUPS

(30) Priorité: 23.12.2021 FR 2114418
(43) Date de publication de la demande: 30.10.2024
(73) Titulaire: COMPAGNIE GENERALE DES ETABLISSEMENTS MICHELIN, 63000 Clermont-Ferrand (FR)
(72) Inventeur: JEAN-BAPTISTE-DIT-DOMINIQUE, François, 63040 Clermont-Ferrand Cedex 09 (FR); MAMMERI, Kahina, 63040 Clermont-Ferrand Cedex 09 (FR)
(74) Mandataire: M.F.P. Michelin
(86) Numéro de dépôt international: PCT/EP2022/086550
(87) Numéro de publication internationale: WO 2023/117840

(56) Documents cités:
- WO-A1-2018/115747
- WO-A1-2019/102128
- WO-A1-2020/136332
- US-A1- 2012 046 418

## Description

L'invention concerne un polymère portant des groupes pendants fonctionnels époxy, ainsi qu'un procédé de préparation ces polymères et leurs utilisations notamment pour des compositions élastomériques, pour des articles semi-finis pour pneumatiques et pour des pneumatiques.

Dans le domaine industriel, des mélanges de polymères avec des charges sont souvent utilisés. Pour que de tels mélanges présentent de bonnes propriétés, on recherche toujours des moyens pour améliorer la dispersion des charges au sein des polymères.

En particulier, pour des compositions élastomériques destinées à la fabrication de pneumatiques, les manufacturiers recherchent en permanence que les compositions élastomériques chargées possèdent de bonnes propriétés mécaniques, telles que le renforcement, et une hystérèse aussi faible que possible. En effet, la baisse d'hystérèse d'une composition élastomérique est favorable à la diminution de la résistance au roulement d'un pneumatique et donc à une baisse de la consommation du carburant d'un véhicule roulant avec de tels pneumatiques.

On sait, que d'une manière générale, pour obtenir les propriétés de renforcement optimales conférées par une charge renforçante, il convient que cette dernière soit présente dans la matrice élastomérique sous forme finale qui soit à la fois la plus finement divisée possible et répartie de la façon la plus homogène possible.

De nombreuses solutions ont déjà été expérimentées pour atteindre une bonne dispersion de la charge renforçante dans une composition élastomérique et pour obtenir des compositions de caoutchouc présentant de bonnes propriétés de renforcement.

En particulier, on peut citer l'utilisation, dans une composition élastomérique, de polymères dont la structure a été modifiée au moyen d'agents de fonctionnalisation, de couplage ou d'étoilage dans le but d'obtenir une bonne interaction entre le polymère ainsi modifié et la charge renforçante, qu'il s'agisse du noir de carbone ou d'une charge inorganique renforçante.

Par exemple, on connait du document WO2019102126A1 un copolymère de styrène et de butadiène sur lequel a été greffé l'agent de fonctionnalisation oxyde 2,4,6-triméthyl-3-(oxiran-2-ylméthoxy)benzonitrile. Cet élastomère ainsi greffé permet d'obtenir une composition élastomérique dont les propriétés d'hystérèse sont améliorées par rapport à une composition élastomérique comprenant un copolymère de styrène et de butadiène non greffé.

Depuis que les économies de carburant et la nécessité de protéger l'environnement sont devenues une priorité, il s'est avéré nécessaire de produire des pneumatiques ayant une résistance au roulement aussi faible que possible, c'est-à-dire comprenant des compositions élastomériques ayant une hystérèse aussi faible que possible.

L'obtention d'une composition élastomérique présentant une hystérèse aussi faible que possible, tout en conservant un bon niveau de performances pour les autres propriétés, telles que le renforcement et la rigidité, est un défi permanent pour les manufacturiers de pneumatiques. En effet, il est connu qu'une diminution de l'hystérèse des compositions élastomériques s'accompagne d'une diminution de la rigidité à cuit. Or, une bande de roulement doit être suffisamment rigide pour assurer un bon niveau de comportement routier du pneumatique.

Il existe donc un besoin constant de disposer de polymères présentant des propriétés d'hystérèse davantage améliorées par rapport aux polymères de l'art antérieur sans que cette amélioration se fasse au détriment des propriétés de rigidité.

Un but de la présente invention est donc de proposer de nouveaux polymères présentant une amélioration du compromis résistance au roulement/ rigidité.

Poursuivant ses recherches, le Demandeur a découvert de manière surprenante que la présence de groupes pendant fonctionnels particuliers dans des polymères, une fois incorporés dans des compositions élastomériques, utilisables notamment pour la fabrication de pneumatiques, conduisait à l'obtention d'un compromis résistance au roulement/rigidité améliorés par rapport à des polymères de l'art antérieur incorporés dans des compositions élastomériques.

Ainsi, un premier objet de la présente invention concerne un polymère comprenant une ou plusieurs unités diéniques et portant le long de la chaîne polymère principale un ou plusieurs groupes pendants de formule (I) suivante : 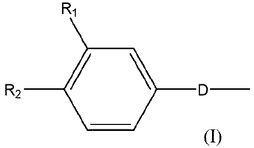 dans laquelle :
- D représente un groupe de rattachement à la chaîne polymère principale ;
- R₁ représente un groupement chimique choisi dans le groupe constitué par -OCH₃, -OCH₂CH₃ et -OR₃;
- R₂ représente un groupement chimique choisi dans le groupe constitué par -OCH₃ et -OR₃;
- à la condition que R₁ ou R₂ soit -OR₃ ;
- R₃ représente un groupement chimique de formule (II) 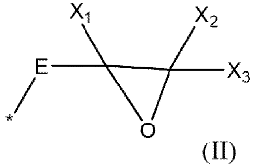
   o dans laquelle E représente un groupe hydrocarboné divalent en C1-C12 comprenant éventuellement un ou plusieurs hétéroatomes ;
   ∘ X₁, X₂, X₃, identiques ou différents, représentent un atome d'hydrogène, un alkyle en C1-C6 ou un aryle en C6-C14 ;
   o le symbole * représente le rattachement du groupement chimique de formule (II) à l'atome d'oxygène.

Préférentiellement, les groupes pendants sont répartis le long de la chaîne polymère principale de façon aléatoire.

Préférentiellement, dans le polymère, le taux de molaire des groupes pendants de formule (I) est compris dans un domaine allant de 0,05 % à 15 %, de préférence de 0,05 % à 10 %, plus préférentiellement de 0,07 % à 5 %.

Préférentiellement, le polymère est un élastomère diénique.

Préférentiellement, le polymère est choisi dans le groupe des élastomères constitué par les copolymères d'éthylène-propylène-monomère diène, les caoutchoucs butyle, le caoutchouc naturel, les polyisoprènes de synthèse, les polybutadiènes, les copolymères de butadiène, les copolymères d'isoprène et les mélanges de ces élastomères.

Préférentiellement, R₁ représente un groupement chimique choisi dans le groupe constitué par -OCH₃ et -OCH₂CH₃ ; et R₂ est -OR₃.

Préférentiellement, E représente un alcanediyle en C1-C12, de préférence un alcanediyle en C1-C10, plus préférentiellement un alcanediyle en C1-C9, de préférence E est choisi dans le groupe constitué par le méthanediyle, l'éthanediyle et le propanediyle.

Préférentiellement, X₁, X₂, X₃, identiques ou différents, sont choisis dans le groupe constitué par l'atome d'hydrogène, les alkyles en C₁-C₆ et le phényle.

Préférentiellement, X₁, X₂, X₃, identiques, sont un atome d'hydrogène.

Préférentiellement, le groupe pendant de formule (I) est le groupe pendant de formule (Ia1)

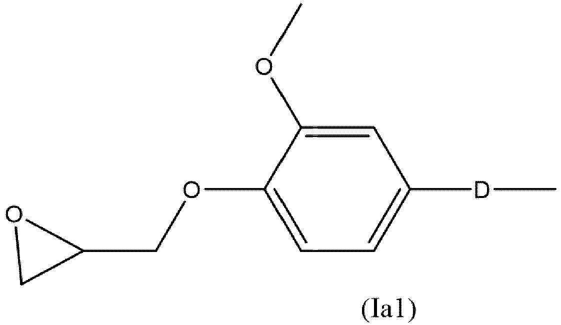

Préférentiellement, le groupe de rattachement D résulte de la réaction d'une fonction oxyde de nitrile avec une unité diénique du polymère.

Un autre objet de la présente invention concerne un procédé de préparation d'un polymère par modification d'un polymère diénique initial, ledit procédé comprenant une étape de greffage sur ledit polymère diénique par un composé dont est issu le groupe pendant de formule (I) défini ci-dessus.

Un autre objet de la présente invention concerne une composition élastomérique à base d'au moins un polymère défini ci-dessus ou d'un polymère susceptible d'être obtenu par un procédé ci-dessus, d'au moins une charge renforçante et d'au moins un agent de réticulation.

Un autre objet de la présente invention concerne un article semi-fini pour pneumatique comprenant au moins un polymère défini ci-dessus, ou d'un polymère susceptible d'être obtenu par un procédé défini ci-dessus ou une composition définie ci-dessus.

Un autre objet de la présente invention concerne un pneumatique comprenant au moins un polymère défini ci-dessus ou d'un polymère susceptible d'être obtenu par un procédé tel que décrit ci-dessus ou comprenant au moins une composition élastomérique définie ci-dessus ou au moins un article semi-fini pour pneumatique ci-dessus.

L'invention ainsi que ses avantages seront aisément compris à la lumière de la description et des exemples de réalisation qui suivent.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Evidemment, les composés mentionnés peuvent également provenir du recyclage de matériaux déjà utilisés, c'est-à-dire peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Par l'expression « composition à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « partie en poids pour cent parties en poids d'élastomère » (ou pce), il faut entendre au sens de la présente invention, la partie, en masse pour cent parties en masse d'élastomère.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. À titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères, de préférence plus de 51 % en masse de la masse totale des élastomères.

Le terme composé 1,3-dipolaire est compris selon la définition donnée par IUPAC. Par définition, un composé 1,3-dipolaire comprend un dipôle.

On entend au sens de la présente invention par « chaîne hydrocarbonée », une chaîne comprenant un ou plusieurs atomes de carbone et un ou plusieurs atomes d'hydrogène.

L'expression « alkyle en Ci-Cj » désigne un groupe hydrocarboné linéaire, ramifié ou cyclique comprenant de i à j atomes de carbone ; i et j étant des nombres entiers.

L'expression « aryle en Ci-Cj » désigne un groupe aromatique comportant de i à j atomes de carbone ; i et j étant des nombres entiers.

Par « alcanediyle en Ci-Cj », on entend un groupe hydrocarboné, dérivé d'un alcane en Ci-Cj tel que défini ci-dessus, dans lequel deux atomes d'hydrogène ont été supprimés. Un alcanediyle est donc un groupe divalent.

Dans la suite du texte, on entend « par taux de groupes pendants de formule (I) », y compris ses formes préférées, présent dans le polymère, de préférence dans l'élastomère diénique, exprimé en pourcentage molaire, le nombre de mole de groupes pendants de formule (I) présents pour cent moles de motif constitutif constituant le polymère, de préférence l'élastomère diénique, qu'il s'agisse indifféremment de motifs diéniques ou non diéniques. Par exemple, si le taux de groupes pendants de formule (I), ou de ses formes préférées, sur un SBR (caoutchouc styrène-butadiène) est de 0,20% molaire, cela signifie qu'il y aura 0,20 motif issu de groupes pendants de formule (I) (ou des formes préférées) pour 100 motifs constitutifs de SBR. Le taux molaire de groupes pendants de formule (I) peut être déterminé par les méthodes conventionnelles d'analyses des polymères, telles que par exemple l'analyse RMN ¹H.

### Polymère diénique :

Le polymère de l'invention est un polymère comprenant une ou plusieurs unités diéniques et portant le long de la chaîne polymère principale un ou plusieurs groupes pendant de formule (I).

De manière connue, un polymère comprend généralement au moins une chaîne polymère principale. Cette chaîne polymère peut être qualifié de principale à partir du moment où toutes les autres chaînes du polymère sont considérées comme des chaînes pendantes comme le mentionne le document « Glossary of basic terms in polymer science » (IUPAC recommendations 1996), PAC, 1996, 68, 2287, p2294.

On entend, au sens de la présente invention, par « groupe pendant », un groupement latéral de la chaîne polymère. Le terme « groupe latéral » au sens de la présente invention, désigne un substituant qui n'est pas un oligomère ou un polymère (voir aussi la définition de « Glossary of basic terms in polymer science » (IUPAC recommendations 1996), PAC, 1996, 68, 2287, p2297).

On entend, au sens de la présente invention, par « polymère comprenant une ou plusieurs unités diéniques », tout polymère, naturel ou synthétique, constitué au moins en partie (i.e. un homopolymère ou un copolymère) d'unités monomères diéniques (monomères porteurs de deux doubles liaisons carbone-carbone, conjuguées ou non). Un tel polymère peut être également appelé polymère diénique.

On entend plus particulièrement par polymère diénique utilisable dans l'invention :
- tout homopolymère d'un monomère diène, conjugué ou non, ayant de 4 à 18 atomes de carbone ;
- tout copolymère d'un diène, conjugué ou non, ayant de 4 à 18 atomes de carbone et d'au moins un autre monomère.

L'autre monomère peut être l'éthylène, une oléfine ou un diène, conjugué ou non.

À titre de diènes conjugués conviennent les diènes conjugués ayant de 4 à 12 atomes de carbone, en particulier les 1,3-diènes, tels que notamment le 1,3-butadiène et l'isoprène.

À titre de diènes non conjugués conviennent les diènes non conjugués ayant de 6 à 12 atomes de carbone, tels que le 1,4-hexadiène, l'éthylidène norbornène, le dicyclopentadiène.

À titre d'oléfines conviennent les composés vinylaromatiques ayant de 8 à 20 atomes de carbone et les alpha-monooléfines aliphatiques ayant de 3 à 12 atomes de carbone.

À titre de composés vinylaromatiques conviennent par exemple le styrène, l'ortho-, méta-, para-méthylstyrène, le mélange commercial « vinyle-toluène », le para-tertiobutylstyrène.

À titre d'α-monooléfines aliphatiques conviennent notamment les alpha-monooléfines aliphatiques acycliques ayant de 3 à 18 atomes de carbone.

Plus particulièrement, le polymère diénique est :
- tout homopolymère d'un monomère diène conjugué, notamment tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinylaromatiques ayant de 8 à 20 atomes de carbone;
- un copolymère d'isobutène et d'isoprène (caoutchouc butyle), ainsi que les versions halogénées, en particulier chlorées ou bromées, de ce type de copolymère.
- tout copolymère obtenu par copolymérisation d'un ou plusieurs diènes, conjugués ou non, avec l'éthylène, une alpha-monooléfine ou leur mélange comme par exemple les élastomères obtenus à partir d'éthylène, de propylène avec un monomère diène non conjugué du type précité.

De préférence, le polymère utilisable dans le cadre de la présente invention est un élastomère diénique. Lorsque le polymère est un élastomère diénique, la chaîne polymère principale est bien entendu une chaîne élastomère principale.

Par élastomère (ou indistinctement caoutchouc) « diénique », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15 % (% en moles)).

On entend particulièrement par élastomère diénique susceptible d'être utilisé dans le cadre de la présente invention :
Préférentiellement, l'élastomère diénique est choisi dans le groupe constitué par les copolymères d'éthylène-propylène-monomère diène (EPDM),les caoutchoucs butyles, le caoutchouc naturel (NR), les polyisoprènes de synthèse (IR), les polybutadiènes (BR), les copolymères de butadiène, les copolymères d'isoprène et les mélanges de ces élastomères.

Préférentiellement, l'élastomère diénique est choisi dans le groupe constitué par les copolymères d'éthylène-propylène-monomère diène (EPDM), le caoutchouc naturel (NR), les polyisoprènes de synthèse (IR), les polybutadiènes (BR), les copolymères de butadiène et de styrène (SBR), les copolymères d'éthylène et de butadiène (EBR), les copolymères d'isoprène et de butadiène (BIR) ou les copolymères d'isoprène, de butadiène et de styrène (SBIR), les copolymères d'isobutène et d'isoprène (caoutchouc butyle IIR), les copolymères d'isoprène-styrène (SIR) et les mélanges de ces élastomères.

Préférentiellement, l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

Plus préférentiellement, l'élastomère diénique est choisi dans le groupe constitué par le caoutchouc naturel, les polyisoprènes de synthèse, les polybutadiènes, les copolymères de butadiène et de styrène, les copolymères d'éthylène et de butadiène, les copolymères d'isoprène et de butadiène, les copolymères d'isoprène, de butadiène et de styrène, les copolymères d'isobutène et d'isoprène, les copolymères d'isoprène et de styrène et les mélanges de ces élastomères.

Les polymères, de préférence les élastomères diéniques, peuvent avoir toute microstructure qui est fonction des conditions de polymérisation utilisées. Ces polymères, de préférences ces élastomères diéniques peuvent être par exemple à blocs, statistiques, séquencés, microséquencés, et être préparer en dispersion en émulsion ou en solution. Ils peuvent être couplés et/ou étoilés, par exemple au moyen d'un atome silicium ou d'étain qui lie entre elles les chaînes polymères. Ils sont de préférence des polymères statistiques, plus préférentiellement des élastomères diéniques statistiques.

### Groupe pendant de formule (I)

Comme mentionné ci-dessus, le polymère, de préférence l'élastomère diénique, de l'invention comprenant une ou plusieurs unité diénique, porte le long de la chaîne polymère principale un ou plusieurs groupes pendants de formule (I) suivante : 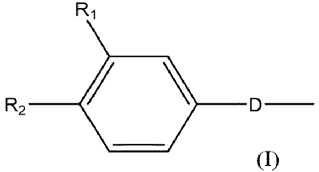 dans laquelle :
- D représente un groupe de rattachement à la chaîne polymère principale ;
- R₁ représente un groupement chimique choisi dans le groupe constitué par -OCH₃, -OCH₂CH₃ et -OR₃;
- R₂ représente un groupement chimique choisi dans le groupe constitué par -OCH₃ et -OR₃;
- à la condition que R₁ ou R₂ soit -OR₃ ;
- R₃ représente un groupement chimique de formule (II) : 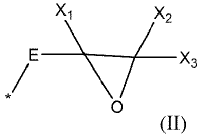
   o dans laquelle E représente un groupe hydrocarboné divalent en C1-C12 comprenant éventuellement un ou plusieurs hétéroatomes ;
   ∘ X₁, X₂, X₃ identiques ou différents, représentent un atome d'hydrogène, un alkyle en C1-C6 ou un aryle en C6-C14 ;
   o le symbole * représente le rattachement du groupement de formule (II) à l'atome d'oxygène.

Préférentiellement, lesdits groupes pendant de formule (I) sont répartis le long de la chaîne polymère principale de façon aléatoire.

En particulier, les groupes pendants de formule (I) sont situés notamment ailleurs qu'aux extrémités de la chaîne polymère principale.

Préférentiellement, le taux de molaire des groupes pendants de formule (I) est compris dans un domaine allant de 0,05 % à 15 %, de préférence de 0,05 % à 10 %, plus préférentiellement de 0,07 % à 5 %.

Plus avantageusement, parmi les groupes pendants de formule (I), les groupes pendants plus particulièrement préférés sont ceux de formule (Ia) 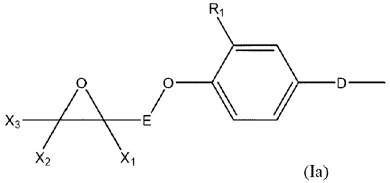 dans laquelle :
- D représente un groupe de rattachement à la chaîne polymère principale ;
- R₁ représente un groupement chimique choisi dans le groupe constitué par -OCH₃ et - OCH₂CH₃ ; plus préférentiellement R₁ représente -OCH₃ ;
- E représente un groupe hydrocarboné divalent en C1-C12 comprenant éventuellement un ou plusieurs hétéroatomes ; et
- X₁, X₂, X₃, identiques ou différents, représentent un atome d'hydrogène, un alkyle en C1-C6 ou un aryle en C6-C14.

Ainsi, un ensemble de groupes pendants de formule (I) particulièrement préférés sont ceux pour lesquels R₁ représente un groupement chimique choisi dans le groupe constitué par -OCH₃ et - OCH₂CH₃ et R₂ est -OR₃. Autrement dit, ces groupes pendants sont ceux correspondant à l'ensemble formé par les composés de formule préférée (Ia).

Préférentiellement, dans les groupes pendants de formule (I), la condition « R₁ ou R₂ soit - OR₃ » signifie que si R₁ est -OCH₃ ou -OCH₂CH₃ alors R₂ est -OR₃ ; ou si R₁ est -OR₃ alors R₂ est -OCH₃. Il y a nécessaire un (1) (et seulement 1) groupement -OR₃ dans ces composés, soit en substituant R₁ soit en substituant R₂.

Dans les groupes pendants de formule (I) et (Ia), E représente un groupe divalent hydrocarboné en C1-C12 pouvant éventuellement contenir un ou plusieurs hétéroatome(s). Par « groupe divalent hydrocarboné » on entend au sens de la présente invention, un groupe espaceur (ou un groupe de liaison) formant un pont entre l'atome d'oxygène attaché au cycle aromatique et le cycle époxy porteur des groupes X₁, X₂, X₃ ; ce groupe espaceur E comprenant de 1 à 12 atomes de carbone, et pouvant éventuellement contenir un ou plusieurs hétéroatome(s) tel(s) que par exemple N, O et S. Ce groupe espaceur peut être une chaîne hydrocarbonée en C1-C12, de préférence saturée, linéaire ou ramifiée, pouvant éventuellement contenir un ou plusieurs hétéroatome(s) tel(s) que par exemple N, O et S. Ladite chaîne hydrocarbonée peut éventuellement être substituée, pour autant que les substituants ne réagissent pas avec le groupe D et le cycle époxy tel que défini ci-dessus.

Préférentiellement, dans les groupes pendants de formule (I) et (Ia), E représente un groupe divalent hydrocarboné en C1-C10, de préférence en C1-C9, pouvant éventuellement contenir un ou plusieurs hétéroatome(s) tel(s) que par exemple N, O et S.

Plus préférentiellement, dans les groupes pendants de formule (I) et (Ia), E représente un alcanediyle en C1-C12, de préférence un alcanediyle en C1-C10, plus préférentiellement un alcanediyle en C1-C9. Plus préférentiellement encore, E est choisi dans le groupe constitué par le méthanediyle, l'éthanediyle et le propanediyle.

Préférentiellement, dans les groupes pendants de formule (I) et (Ia), X₁, X₂, X₃, identiques ou différents, sont choisis dans le groupe constitué par l'atome d'hydrogène, les alkyles en C1-C6 et les aryles en C6-C14.

Préférentiellement, dans les groupes pendants de formule (I) et (Ia), X₁, X₂, X₃, identiques ou différents, sont choisis dans le groupe constitué par l'atome d'hydrogène, les alkyles en C1-C6 et le phényle.

Préférentiellement, dans les groupes pendants de formule (I) et (Ia), X₁, X₂, X₃, identiques ou différents, sont choisis dans le groupe constitué par l'atome d'hydrogène, les alkyles en C1-C3 et le phényle.

Selon un mode de réalisation de l'invention préféré, dans les groupes pendants de formule (I) et (Ia), X₁, X₂, X₃ , identiques, représentent un atome d'hydrogène.

Selon un autre mode de réalisation de l'invention préféré, dans les groupes pendants de formule (I), et (Ia), X₁ et X₂ représentent un atome d'hydrogène et X₃ représente un phényle.

Selon un autre mode de réalisation de l'invention, dans les groupes pendants de formule (I) et (Ia), X₃ est un atome d'hydrogène, et X₁ et X₂, identiques ou différents, représente un atome d'hydrogène ou un méthyle.

Comme indiqué ci-dessus, parmi les groupes pendants de formule (I), les groupes pendants de formule (Ia) sont particulièrement préférés : 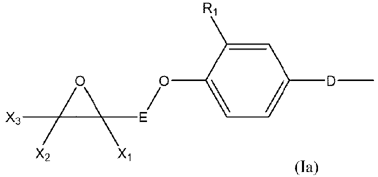 dans laquelle :
- D représente un groupe de rattachement à la chaîne polymère principale ;
- R₁ représente un groupement chimique choisi dans le groupe constitué par -OCH₃ et - OCH₂CH₃ ; plus préférentiellement R₁ représente -OCH₃ ;
- E représente un groupe hydrocarboné divalent en C1-C12 comprenant éventuellement un ou plusieurs hétéroatomes ; et
- X₁, X₂, X₃, identiques ou différents, représentent un atome d'hydrogène, un alkyle en C1-C6 ou un aryle en C6-C14.

Parmi les groupes pendants (Ia) ceux qui sont particulièrement préférés sont ceux pour lesquels R₁ représente un groupement chimique choisi dans le groupe constitué par -OCH₃ et - OCH₂CH₃ ; E représente un alcanediyle en C1-C12, de préférence un alcanediyle en C1-C10, plus préférentiellement un alcanediyle en C1-C9 et X₁, X₂, X₃, identiques ou différents, sont choisis dans le groupe constitué par l'atome d'hydrogène, les alkyles en C1-C3 et le phényle, plus préférentiellement un X₁, X₂, X₃, identiques, sont un atome d'hydrogène.

Plus préférentiellement encore, les groupes pendants de formule (Ia) plus particulièrement préférés sont ceux dans laquelle R₁ représente -OCH₃ ; E représente un alcanediyle en C1-C12, de préférence un alcanediyle en C1-C10, plus préférentiellement un alcanediyle en C1-C9 et X₁, X₂, X₃, identiques ou différents, sont choisis dans le groupe constitué par l'atome d'hydrogène, les alkyles en C1-C3 et le phényle, plus préférentiellement un X₁, X₂, X₃, identiques, sont un atome d'hydrogène. Plus préférentiellement encore, les groupes pendants de formule (Ia) plus particulièrement préférés sont ceux dans laquelle R₁ représente -OCH₃ ; E représente un alcanediyle en C1-C9 et X₁, X₂, X₃, identiques, sont un atome d'hydrogène. Plus préférentiellement encore, les groupes pendants de formule (Ia) plus particulièrement préférés sont ceux dans laquelle R₁ représente -OCH₃ ; E représente le méthanediyle, l'éthanediyle et le propanediyle ; et X₁, X₂, X₃, identiques, sont un atome d'hydrogène.

Plus préférentiellement encore, parmi les groupes pendants de formule (I) et (Ia), ceux de formule (Ia1) sont particulièrement préférés : 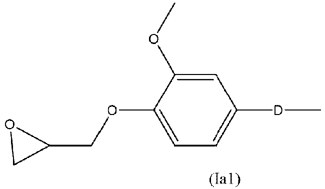 avec D tel que défini ci-dessus.

Conformément aux formules (I), (Ia) et (Ia1), le groupe pendant comprend un groupement chimique désigné par le symbole D, ce groupement chimique désignant un groupe de rattachement à la chaîne du polymère principale. Autrement dit, D permet de lier de façon covalente le phényle substitué par R₁ et R₂ à la chaîne polymère principale.

Le groupement chimique D est issu d'un groupement chimique D' qui est réactif vis-à-vis d'une unité diénique du polymère, c'est-à-dire réactif vis-à-vis d'une double liaisons carbone-carbone du monomère diénique. Ces groupement chimique D' sont connus et peuvent être par exemple une fonction vinylique polymérisable ou par une fonction oxyde de nitrile.

Dans ce cas où groupement chimique D' est d'une une fonction vinylique polymérisable, cette fonction vinylique polymérisable est issue d'une unité monomère d'un monomère vinylique au moins substitué par le phényle portant les substituants R₁ et R₂ tels que définis ci-dessus. Les groupes pendants de formule (I), de préférence les groupes pendants de formule (Ia) et (Ia1), peuvent alors être apportés le long de la chaîne polymère par polymérisation radicalaire d'un mélange de monomères comprenant au moins un monomère 1,3-diéne et au moins un monomère vinylique comprenant au moins une fonction vinylique polymérisable et au moins substitué par le phényle portant les substituants R₁ et R₂ tels que définis ci-dessus.

Préférentiellement, le groupement chimique D peut résulter de la réaction d'une fonction oxyde de nitrile réactive vis-à-vis d'une unité diénique du polymère. Les groupes pendants de formule (I), de préférence les groupes pendants de formule (Ia) et (Ia1), peuvent alors être apportés le long de la chaîne polymère par un composé 1,3-dipolaire comprenant une fonction oxyde de nitrile et le phényle portant les substituants R₁ et R₂ tels que définis ci-dessus. Le polymère de l'invention est alors obtenu par greffage d'un composé 1,3-dipolaire sur au moins une double liaisons carbone-carbone d'une unité diénique du polymère.

De manière surprenante, les polymères de l'invention, de préférence les élastomères diéniques, portant le long de leur chaîne principale un ou plusieurs groupes pendants de formule (I), plus préférentiellement un ou plusieurs groupes pendants de formule (Ia), encore plus préférentiellement un ou plusieurs groupes pendants de formule (Ia1), confèrent aux compositions élastomériques les contenant un compromis résistance au roulement/ rigidité amélioré et une amélioration significative des propriétés de renforcement, par rapport à des compositions de l'art antérieur.

L'invention a également pour objet un procédé de préparation d'un polymère selon l'invention par modification d'un polymère diénique initial, ledit procédé comprenant une étape de greffage sur ledit polymère diénique initial, par un composé dont est issu le groupe pendant de formule (I), de préférence de formule (Ia), plus préférentiellement de formule (Ia1), tel que défini précédemment.

Le greffage du polymère se fait par réaction du polymère diénique initiale avec le ou les groupes réactifs de la fonction chimique (groupement D') dont est issu le groupement chimique D, en particulier avec la fonction oxide de nitrile dont est issu le groupement chimique D. Lors de cette réaction, ce ou ces groupes réactifs forment des liaisons covalentes avec la chaîne du polymère.

Préférentiellement, le greffage du composé dont est issu le groupe pendant de formule (I), de formule (Ia), plus préférentiellement de formule (Ia1), est effectuée par cycloaddition [3+2] du ou des groupes réactifs de la fonction dont est issu le groupement chimique D et une ou plusieurs doubles liaisons carbone-carbone de la chaîne d'un polymère diénique initial. Un exemple de mécanismes de la cycloaddition [3+2] peut être trouvé dans le document WO2012007441. De préférence la fonction réactive dont est issu le groument chimique D est une fonction oxyde de nitrile.

Préférentiellement, le composé dont est issu le groupe pendant de formule (I) est un composé 1,3-dipolaire, le dipôle constituant le groupe réactif de la fonction réactive vis-à-vis d'une unité diénique du polymère dont est issu le groupe D. Plus préférentiellement, le composé dont est issu le groupe pendant de formule (I) est un oxyde de nitrile de formule (III) suivante : 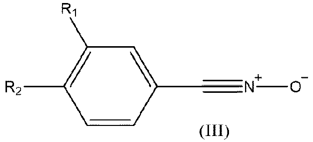 avec R₁ et R₂ tels que définis précédemment pour les groupes pendant de formule (I), c'est-à-dire avec :
- R₁ représente un groupement chimique choisi dans le groupe constitué par -OCH₃, -OCH₂CH₃ et -OR₃;
- R₂ représente un groupement chimique choisi dans le groupe constitué par -OCH₃ et -OR₃;
- à la condition que R₁ ou R₂ soit -OR₃ ;
- R₃ représente un groupement chimique de formule (II) : 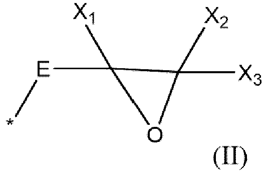
   ∘ dans laquelle E représente un groupe hydrocarboné divalent en C1-C12 comprenant éventuellement un ou plusieurs hétéroatomes ;
   ∘ X₁, X₂, X₃, identiques ou différents, représentent un atome d'hydrogène, un alkyle en C1-C6 ou un aryle en C6-C14 ;
   ∘ le symbole * représente le rattachement du groupement chimique de formule (II) à l'atome d'oxygène.

Le greffage du composé de formule (III) dont est issu le groupe pendant de formule (I), peut être réalisé en masse, par exemple dans une extrudeuse, un mélangeur interne ou un mélangeur externe tel qu'un mélangeur à cylindre. Par exemple, le greffage peut être alors mis en œuvre soit à une température du mélangeur externe ou du mélangeur interne inférieure à 60°C, suivi d'une étape de réaction de greffage sous presse ou en étuve à des températures allant de 80°C à 200°C, soit à une température du mélangeur externe ou du mélangeur interne supérieure à 60°C sans traitement thermique postérieur.

Le procédé de greffage peut également s'effectuer en solution en continu ou en discontinu. Le polymère ainsi modifié peut être séparé de sa solution par tout moyen connu de l'homme de l'art et en particulier par une opération de stripping à la vapeur d'eau.

Préférentiellement, dans le procédé de préparation selon l'invention, le polymère diénique initial est un élastomère diénique initial, notamment tel que décrit ci-dessus y compris dans les modes préférés de ces élastomères.

Préférentiellement lorsque le groupe pendant est un groupe pendant de formule (Ia), le composé dont est issu ce groupe pendant est un composé 1,3-dipolaire de formule (IIIa) correspondante à savoir : 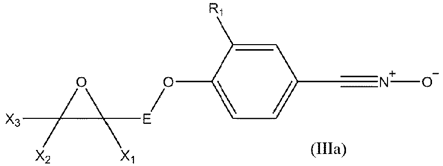 avec R₁, X₁, X₂, X₃, et E tels que définis précédemment pour les groupes pendants de formule (III), c'est-à-dire avec:
- R₁ représente un groupement chimique choisi dans le groupe constitué par -OCH₃ et - OCH₂CH₃ ; plus préférentiellement R₁ représente -OCH₃ ;
- E représente un groupe hydrocarboné divalent en C1-C12 comprenant éventuellement un ou plusieurs hétéroatomes ; et
- X₁, X₂, X₃, identiques ou différents, représentent un atome d'hydrogène, un alkyle en C1-C6 ou un aryle en C6-C14.

Préférentiellement, lorsque le groupe pendant est un groupe pendant de formule (Ia1), le composé dont est issu ce groupe pendant est un composé 1,3-dipolaire de formule (IIIa1) correspondante à savoir :

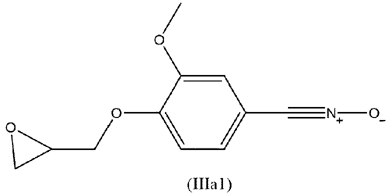

Les composés 1,3-dipolaire de formule (III) et ses modes préférés de formule (IIIa) et (IIIa1) peuvent être obtenus notamment par un procédé de préparation comprenant au moins une réaction (d) d'un composé de formule (IV) avec un agent oxydant en présence d'au moins un solvant organique SL1 selon le schéma réactionnel suivant pour donner le composé de formule (III) : 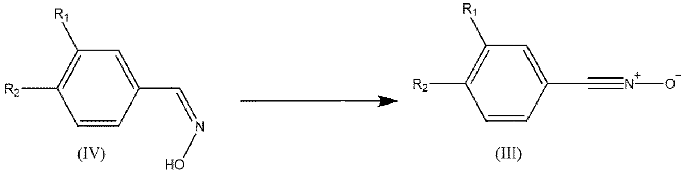 avec :
- R₁ représente un groupement chimique choisi dans le groupe constitué par -OCH₃, - OCH₂CH₃, et -OR₃ ;
- R₂ représente un groupement chimique choisi dans le groupe constitué par -OCH₃ et - OR₃ ;
- à la condition que R₁ ou R₂ soit -OR₃ ;
- R₃ représente un groupement chimique de formule (II) 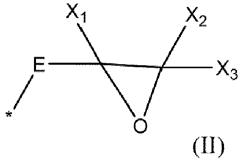
   ∘ dans laquelle E représente un groupe hydrocarboné divalent en C1-C12 comprenant éventuellement un ou plusieurs hétéroatomes ;
   ∘ X₁, X₂, X₃, identiques ou différents, représentent un atome d'hydrogène, un alkyle en C1-C6 ou un aryle en C6-C14 ;
   ∘ le symbole * représente le rattachement du groupement de formule (II) à l'atome d'oxygène.

Les modes préférés de R₁, R₂, E, X₁, X₂ et X₃ tels que décrits ci-dessus, s'appliquent également aux procédés de préparation d'un composé de formule (III) à partir d'un composé de formule (IV).

L'homme du métier sait adapter cette réaction (d) pour obtenir les composés 1,3-dipolaire préférés de formule (IIIa) et (IIIa1).

De manière préférée dans ces procédés, ledit agent oxydant est choisi parmi l'hypochlorite de sodium, le N-bromosuccinimide en présence d'une base, le N-chlorosuccinimide en présence d'une base, et l'eau oxygénée en présence d'un catalyseur. Plus préférentiellement, l'agent oxydant est choisi parmi le groupe constitué par l'hypochlorite de sodium et le N-bromosuccinimide en présence ou non d'une base. Préférentiellement, la base peut être la triéthylamine. Plus préférentiellement encore, l'agent oxydant est l'hypochlorite de sodium.

Avantageusement, la quantité d'agent oxydant est de 1 à 5 équivalents molaires, préférentiellement de 1 à 2 équivalents molaires par rapport à la quantité molaire du composé de formule (IV).

Préférentiellement, le solvant organique SL1 est choisi parmi les solvants chlorés et les solvants de type ester, éther et alcool, plus préférentiellement choisi parmi le dichlorométhane, le trichlorométhane, l'acétate d'éthyle, l'acétate de butyle, l'éther diéthylique, l'isopropanol et l'éthanol, encore plus préférentiellement est choisi parmi l'acétate d'éthyle, le trichlorométhane, le dichlorométhane et l'acétate de butyle.

De préférence, le composé de formule (IV) représente de 1 à 30 % en poids, de préférence de 1 à 20 % en poids, par rapport au poids total de l'ensemble comprenant ledit composé de formule (IV), ledit solvant organique SL1 et ledit agent oxydant.

Préférentiellement, le procédé de l'invention comprend après la réaction (d), une étape de récupération du composé de formule (III).

Le composé de formule (IV) peut être notamment obtenu à partir d'un procédé de préparation comprenant au moins une réaction (c) d'un composé de formule (V) avec l'hydroxylamine NH₂OH selon le schéma réactionnel suivant : 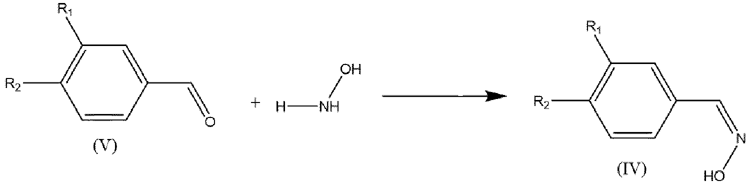 avec :
- R₁ représente un groupement chimique choisi dans le groupe constitué par -OCH₃, - OCH₂CH₃, et -OR₃ ;
- R₂ représente un groupement chimique choisi dans le groupe constitué par -OCH₃ et - OR₃ ;
- à la condition que R₁ ou R₂ soit -OR₃ ;
- R₃ représente un groupement chimique de formule (II) : 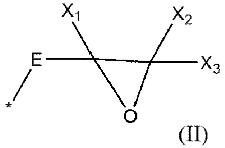
   ∘ dans laquelle E représente un groupe hydrocarboné divalent en C1-C12 comprenant éventuellement un ou plusieurs hétéroatomes ;
   ∘ X₁, X₂, X₃, identiques ou différents, représentent un atome d'hydrogène, un alkyle en C1-C6 ou un aryle en C6-C14 ;
   ∘ le symbole * représente le rattachement du groupement de formule (II) à l'atome d'oxygène.

Les modes préférés de R₁, R₂, E, X₁, X₂ et X₃ tels que décrits ci-dessus, s'appliquent également aux procédés de préparation d'un composé de formule (IV) à partir d'un composé de formule (V).

L'homme du métier sait adapter cette réaction (c) pour obtenir les composés 1,3-dipolaire préférés de formule (IIIa) et (IIIa1).

Préférentiellement, l'ajout d'hydroxylamine dans l'étape (c), est réalisé à une température allant de 1°C à 100°C, plus préférentiellement entre 20°C et 70°C.

L'hydroxylamine est ajoutée soit en solution dans l'eau soit sous forme d'un sel. Lorsque l'hydroxylamine est sous forme d'un sel, elle peut être choisie dans le groupe constitué par le sulfate d'hydroxylamine, le chlorure d'hydroxylamine et leurs mélanges. Dans le cas de l'utilisation de l'hydroxylamine sous forme d'un sel, une base peut être préférentiellement additionnée au milieu réactionnel. À titre d'exemple de base, on peut citer l'acétate de sodium ou la triéthylamine. La quantité de base additionnée pourra être comprise dans un domaine allant de 1 à 2 équivalents molaires par rapport l'hydroxylamine générée, préférentiellement de 1 à 1,2 équivalents molaires par rapport l'hydroxylamine générée. Par « hydroxylamine générée », on entend le cation (NH₃⁺OH) du sel d'hydroxylamine qui est libéré lors de la mise en contact dudit sel avec l'eau. Lorsqu'on utilise une base, on mélange ladite base avec le sel d'hydroxylamine, puis on dissout l'ensemble dans l'eau. Préférentiellement, l'hydroxylamine est mise en contact avec le composé de formule (Ic) sous la forme d'un sel d'hydroxylamine en présence d'une base, telle que l'acétate de sodium ou la triéthylamine.

Préférentiellement, le procédé de l'invention comprend après la réaction (c), une étape de récupération du composé de formule (IV).

Le composé de formule (V) peut être obtenu par un procédé de préparation comprenant au moins une réaction (b) du composé de formule (VI) avec un composé de formule (VII) en présence d'au moins un agent de transfert de phase et à une température allant de 10°C à 120°C, préférentiellement de 20°C à 100°C, selon le schéma réactionnel suivant : 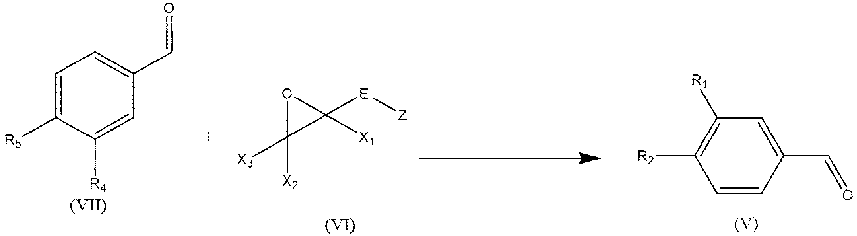
- avec pour le composé de formule (VII) :
   ∘ R₄ représente un groupement chimique choisi dans le groupe constitué par -OCH₃, -OCH₂CH₃ et -OH;
   ∘ R₅ représente un groupement chimique choisi dans le groupe constitué par -OCH₃ et -OH; et
   ∘ à la condition que R₄ ou R₅ soit -OH ;
- avec pour le composé de formule (VI) :
   ∘ E représente un groupe hydrocarboné divalent en C1-C12 comprenant éventuellement un ou plusieurs hétéroatomes ; et
   ∘ X₁, X₂, X₃ identiques ou différents, représentent un atome d'hydrogène, un alkyle en C1-C6 ou un aryle en C6-C14 ; et
   ∘ Z représente un groupe nucléofuge ;
- avec pour le composé de formule (V) : R₁ et R₂ tel que défini ci-dessus.

Les modes préférés de R₁, R₂, E, X₁, X₂ et X₃ s'appliquent également au procédé de préparation d'un composé de formule (V) à partir des composés de formule (VI) et des composés de formule (VII).

L'homme du métier sait adapter cette réaction (b) pour obtenir les composés 1,3-dipolaire préférés de formule (IIIa) et (IIIa1).

On entend par « groupe nucléofuge » un groupe partant. Le groupe Z peut être choisi parmi le chlore, le brome, l'iode, le fluor, le groupe mésylate, le groupe tosylate, le groupe acétate, et le groupe trifluorométhylsulfonate. De préférence, Z est le brome ou le chlore.

L'agent de transfert de phase peut être choisi parmi les sels de phosphonium, les sels d'ammonium et leurs mélanges. Préférentiellement l'agent de transfert de phase est le bromure de tétrabutylammonium.

Préférentiellement, la quantité molaire d'agent de transfert de phase est de 0,01 à 1 équivalents molaires, de préférence de 0,05 à 0,5 équivalents molaires par rapport à la quantité molaire de composé de formule (VI).

Préférentiellement, le procédé de l'invention comprend après la réaction (b), une étape de récupération du composé de formule (V).

Les composés de formule (VII) tels que définis ci-dessus sont disponibles commercialement auprès de fournisseurs tels que Sigma -Aldrich, Merk, etc. Ils peuvent être obtenus par synthèse chimique, ou dans le cas de la vanilline par extraction à partir de la gousse de vanille ou dans le cas de l'iso-vanilline par extraction du manioc, ou bien encore issus de la fermentation par des microorganismes, notamment par fermentation à partir de l'acide férulique.

Les composés de formule (VI) peuvent être disponibles commercialement ou peuvent être obtenus par époxydation de l'halogénoalcène correspondant de formule (VIII) selon le schéma réactionnel ci-dessous. La synthèse d'un composé comprenant un cycle époxyde à partir de son alcène correspondant est bien connue. Par exemple, cette époxydation peut s'effectuer en présence de peracide tel que l'acide métachloroperbenzoïque, l'acide peracétique, l'acide performique. Une autre technique bien connue est l'utilisation de diméthyldioxirane.

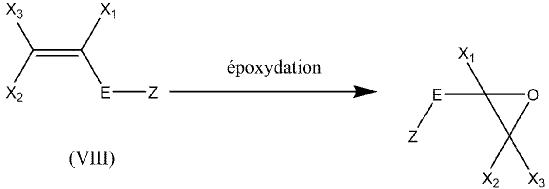

Les composés de formule (VIII) sont disponibles commercialement auprès des fournisseurs tels que Sigma Aldrich, ABCR.

L'invention a aussi pour objet une composition élastomérique à base d'au moins un polymère de l'invention, c'est-à-dire d'au moins un polymère diénique comprenant un ou plusieurs groupes pendants de formule (I), préférentiellement un ou plusieurs groupes pendants de formule (Ia), plus préférentiellement encore un ou plusieurs groupes pendants de formule (Ia1), d'au moins une charge renforçante et d'au moins un agent de réticulation chimique.

Préférentiellement, le polymère de l'invention utilisable dans la composition est un élastomère diénique. Plus préférentiellement encore, le polymère est choisi dans le groupe des élastomères constitué par les copolymères d'éthylène-propylène-monomère diène, les caoutchoucs butyle, le caoutchouc naturel, les polyisoprènes de synthèse, les polybutadiènes, les copolymères de butadiène, les copolymères d'isoprène et les mélanges de ces élastomères.

Dans cette composition, le ou les polymères de l'invention peuvent être utilisés en association avec tout type d'élastomères synthétique autre que diénique, voire avec des polymères autres que des élastomères comme par exemple des polymères thermoplastiques. Préférentiellement, dans le cas d'un mélange avec au moins un autre polymère, le polymère diénique comprenant au moins un groupe pendant de formule (I) est le polymère majoritaire dans la composition élastomérique. On notera que l'amélioration des propriétés de la composition élastomérique selon l'invention sera d'autant plus élevée, que la proportion dudit ou desdits polymères additionnels dans la composition élastomérique selon l'invention sera plus réduite.

Comme vu précédemment, un autre composant de la composition élastomérique selon l'invention est une charge renforçante.

On peut utiliser tout type de charge dite renforçante, connue pour ses capacités à renforcer une composition élastomérique utilisable notamment pour la fabrication de pneumatiques, par exemple une charge organique telle que du noir de carbone, une charge inorganique renforçante telle que de la silice ou encore un mélange de ces deux types de charges. Lorsqu'on utilise une charge inorganique renforçante telle qu'une silice, on y associera de manière connu un agent de couplage.

Avantageusement, la charge renforçante est choisie parmi le noir de carbone, une charge inorganique renforçante, de préférence une silice, et leurs mélanges.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772).

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition élastomérique destinée à la fabrication de pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO₂) ou du type alumineux, en particulier l'alumine (Al₂O₃).

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Dans le présent exposé, la surface spécifique BET pour la charge inorganique, en particulier pour la silice, est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

Pour coupler la charge inorganique renforçante au polymère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique.

A titre d'agent de couplage, on peut utiliser les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Préférentiellement, la charge renforçante comprend majoritairement au moins une silice.

Un autre composant de la composition élastomérique selon l'invention est un agent de réticulation. L'agent de réticulation permet la formation de liaisons covalentes entre les chaînes élastomères, ce qui leur confère des propriétés élastiques.

L'agent de réticulation peut être tout type de système connu de l'homme de l'art dans le domaine des compositions élastomériques pour pneumatique. Il peut notamment être à base de soufre ou à base de peroxydes.

De manière préférentielle, l'agent de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Les compositions élastomériques conformes à l'invention peuvent comporter également tout ou partie des additifs et agents de mise en œuvre usuels, connus de l'homme de l'art et habituellement utilisés dans les compositions élastomériques notamment pour pneumatiques, en particulier de bandes de roulement, comme par exemple des plastifiants (tels que des huiles plastifiantes et/ou des résines plastifiantes), des charges non renforçantes, des pigments, des agents de protection tels que cires anti-ozone, anti-ozonants chimiques, anti-oxydants, des agents anti-fatigue, des résines renforçantes (telles que décrites par exemple dans la demande WO 02/10269).

Les compositions élastomériques sont fabriquées dans des mélangeurs appropriés, en utilisant deux phases de préparation successives :
- une première phase de travail ou malaxage thermomécanique (phase dite « non-productive ») conduite à une température maximale comprise dans un domaine allant de 110°C à 200°C, de préférence de 130°C à 185°C, pendant une durée généralement comprise dans un domaine allant de 2 à 10 minutes,
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple dans un domaine allant de 40°C à 100°C. On incorpore alors l'agent de réticulation, et l'ensemble est mélangé pendant quelques minutes, par exemple dans un domaine allant de 5 à 15 min.

De manière générale, tous les constituants de base de la composition élastomérique selon de l'invention, à l'exception de l'agent de réticulation chimique, à savoir la ou les charges renforçantes, l'agent de couplage le cas échéant, sont incorporés de manière intime, par malaxage, au polymère portant le long de sa chaîne un ou plusieurs groupes pendants de formule (I) ou ses formes préférées, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise dans un domaine allant de 110°C à 200°C, de préférence comprise de 130°C à 185°C.

A l'issue de la seconde phase de travail, la composition élastomérique finale ainsi obtenue peut ensuite être calandrée par exemple sous forme d'une feuille ou d'une plaque, notamment pour caractérisation, ou encore extrudée sous la forme d'un profilé de caoutchouc utilisable comme article semi-fini pour pneumatique.

Un autre objet de la présente invention est un article semi-fini pour pneumatique comprenant au moins un polymère de l'invention tel que décrit ci-dessus, y compris ses formes préférées, ou susceptible d'être obtenu selon le procédé décrit ci-dessus ou au moins une composition élastomérique telle que définie ci-dessus. De préférence l'article semi-fini pour pneumatique est une bande de roulement pour pneumatique.

L'invention a également pour objet un pneumatique comprenant au moins un polymère de l'invention tel que décrit ci-dessus, y compris ses formes préférées, ou susceptible d'être obtenu selon le procédé décrit ci-dessus ou au moins une composition élastomérique selon l'invention telle que définie ci-dessus ou au moins un article semi-fini pour pneumatique tel que décrit ci-dessus.

Préférentiellement, le pneumatique selon l'invention pourra être choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

Les exemples qui suivent permettent d'illustrer l'invention, cette dernière ne saurait cependant être limitée à ces seuls exemples.

### Exemples :

### 1. Méthodes

### 1.1 Mesure des masses molaires moyennes en nombre (Mn), en poids (Mw) et de l'indice de polydispersité des élastomères

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un élastomère. À partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

### Préparation de l'échantillon d'élastomère à tester

Il n'y a pas de traitement particulier de l'échantillon de l'élastomère avant analyse. Celui-ci est simplement solubilisé à une concentration d'environ 1 g/L, dans du chloroforme ou dans le mélange suivant : tétrahydrofurane + 1 % vol. de diisopropylamine + 1 % vol. de triéthylamine + 1 % vol. d'eau distillée (% vol. = % volume). Puis, la solution est filtrée sur filtre de porosité 0,45 µm avant injection.

### Analyse SEC

L'appareillage utilisé est un chromatographe « WATERS alliance ». Le solvant d'élution est le mélange suivant : tétrahydrofurane + 1 % vol. de diisopropylamine + 1 % vol. de triéthylamine ou du chloroforme selon le solvant utilisé pour la mise en solution de l'élastomère. Le débit est de 0,7 mL/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de l'élastomère est 100 µL. Le détecteur est un réfractomètre différentiel « WATERS 2410 » de longueur d'onde 810 nm. Le logiciel d'exploitation des données chromatographiques est le système « WATERS EM POWER ». Les masses molaires moyennes calculées sont relatives à une courbe d'étalonnage réalisée à partir de polystyrènes étalons commerciaux « PSS READY CAL-KIT ».

### 1.2. Caractérisations des molécules

L'analyse structurale ainsi que la détermination des puretés molaires des molécules de synthèse sont réalisées par une analyse RMN. Les spectres sont acquis sur un spectromètre « Avance 3 400 MHz BRUKER » équipé d'une sonde « large bande BBFO-zgrad 5 mm ». L'expérience RMN ¹H quantitative utilise une séquence simple impulsion 30° et un délai de répétition de 3 secondes entre chacune des 64 acquisitions. Les échantillons sont solubilisés dans un solvant deutéré, le diméthylsulfoxide deutéré (DMSO) sauf indication contraire. Le solvant deutéré est également utilisé pour le signal de « lock ». Par exemple, la calibration est réalisée sur le signal des protons du DMSO deutéré à 2,44 ppm par rapport à une référence TMS à 0 ppm. Le spectre RMN ¹H couplé aux expériences 2D HSQC ¹H/¹³C et HMBC ¹H/¹³C permettent la détermination structurale des molécules (cf. tableaux d'attributions). Les quantifications molaires sont réalisées à partir du spectre RMN 1D ¹H quantitatif.

L'analyse par spectrométrie de masse est réalisée en injection directe par un mode d'ionisation en électrospray (ID/ESI). Les analyses ont été réalisées sur un spectromètre HCT Bruker (débit 600 µL/min, pression du gaz nébuliseur 10 psi, débit du gaz nébuliseur 4 L/min).

### 1.3. Caractérisations des composés greffés sur les élastomères diéniques

La détermination du taux molaire des composés greffés sur les élastomères diéniques est réalisée par une analyse RMN. Les spectres sont acquis sur un spectromètre « 500 MHz BRUKER » équipé d'une « CryoSonde BBFO-zgrad-5 mm ». L'expérience RMN ¹H quantitative, utilise une séquence simple impulsion 30° et un délai de répétition de 5 secondes entre chaque acquisition. Les échantillons sont solubilisés dans le chloroforme deutéré (CDCl₃) dans le but d'obtenir un signal de « lock ». Des expériences RMN 2D ont permis de vérifier la nature du motif greffé grâce aux déplacements chimiques des atomes de carbone et de proton.

### 1.4. Propriétés dynamiques des compositions élastomériques

Les propriétés dynamiques G* et tan(δ)max sont mesurées sur un viscoanalyseur (Metravib VA4000), selon la norme ASTM D5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10 Hz, à une température de 60°C. On effectue un balayage en amplitude de déformation de 0,1 % à 100 % crête-crête (cycle aller) puis de 100 % à 0,1 % crête-crête (cycle retour).

Les résultats exploités sont le module complexe de cisaillement dynamique G* à 50 % de déformation (G*_{50%} retour), le facteur de perte dynamique tan(δ) à 60°C. Pour le retour, on enregistre la valeur du module complexe de cisaillement dynamique G* à 50 % de déformation, noter G*_{50%retour à 60°C} et la valeur maximale du facteur perte dynamique tan(δ) observée, notée tan(δ)_{max à 60°C}.

Les résultats sont indiqués en base 100 ; la valeur arbitraire 100 étant attribuée au témoin pour calculer et comparer ensuite tan(δ)_{max à 60°C} et G*_{50% retour à 60°C}.

Pour tan(δ)_{max à 60°C}, la valeur en base 100 pour l'échantillon à tester est calculée selon l'opération : (valeur de tan(δ)ₘₐₓ à _{60°C} de l'échantillon à tester/valeur de tan(δ)ₘₐₓ à _{60°C} du témoin) × 100. De cette façon, un résultat inférieur à 100 indique une diminution de l'hystérèse qui correspond à une amélioration de la performance de résistance au roulement.

Pour G*_{50%retour à 60°C}, la valeur en base 100 pour l'échantillon à tester est calculée selon l'opération : (valeur de G*_{50%retour} à _{60°C} de l'échantillon à tester/valeur de G*_{50%retour à 60°C} du témoin) × 100. De cette façon, un résultat supérieur à 100 indique une amélioration du module complexe de cisaillement dynamique G*_{50%retour à 60°C}, qui corrobore d'une amélioration de la rigidité du matériau.

### 1.5. Essai de traction.

Ces essais de traction permettent de déterminer les contraintes d'élasticité. Sauf indication différente, ils sont effectués conformément à la norme française NF T46-002 de septembre 1988. Un traitement des enregistrements de traction permet également de tracer la courbe de module en fonction de l'allongement. On mesure en première élongation le module sécant nominal calculé en se ramenant à la section initiale de l'éprouvette (ou contrainte apparente, en MPa) à 100% d'allongement noté MSA100 et à 300% d'allongement noté MSA300. Toutes ces mesures de traction sont effectuées dans les conditions normales de température (23 ± 2 °C) selon la norme NF T46-002 et à une température de 100°C.

Le rapport MSA300/MSA100 est l'indice de renforcement. La valeur en base 100 pour l'échantillon à tester est calculée selon l'opération : (valeur de MSA300/MSA100 de l'échantillon à tester/valeur de MSA300/MSA100 du témoin) × 100. De cette façon, un résultat supérieur à 100 indique une amélioration de l'indice de renforcement.

### 2. Synthèse des composés

### 2.1. Synthèse de l'oxyde de 3-méthoxy-4-(oxiran-2-ylmethoxy)benzonitrile (Composé A)

La synthèse du composé A s'effectue selon le schéma réactionnel suivant : [Chem 19]

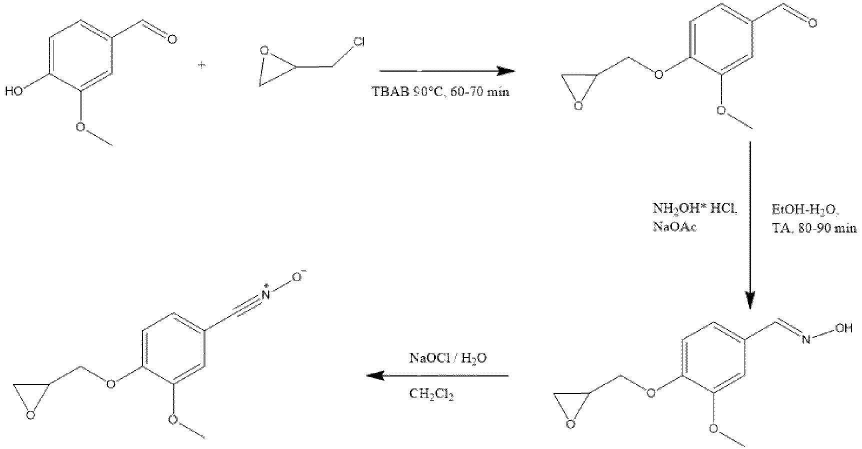

La vanilline provient de la société Sigma-Aldrich qui la commercialise sous la référence « W310700-1KG ».

### 2.1.1. Étape 1 : Synthèse du 3-méthoxy-4-(oxiran-2-ylméthoxy)benzaldéhyde

A une solution de la vanilline (20 g; 131 mmol) dans l'épichlorohydrine (278 mL; 3,56 mol soit 27 eq. (eq. = équivalent molaire) est ajouté le bromure de tétrabutylammonium (4,24g; 13,15 mmol soit 0,1 eq.). Le milieu réactionnel est alors agité pendant 60-70 minutes à une température de 90°C. Après retour à température ambiante, le mélange réactionnel est dilué par de l'acétate d'éthyle (150 ml), lavé par de la saumure (3 x 75 ml) et enfin par de l'eau distillée (75 ml). La phase organique est ensuite séparée, séchée sur du sulfate de sodium et évaporée sous pression réduite (T bain = 50°C ; 13 mbar). L'huile obtenue est triturée par de l'alcool isopropylique (i-PrOH) glacé (50 ml) permettant une cristallisation rapide. Le précipité est filtré et lavé par de l'i-PrOH glacé (3 x 35 ml) ; puis séché à l'air.

Un solide blanc (23,16g; 111 mmol) est obtenu avec un rendement de 85 %. La pureté molaire est supérieure à 90% (RMN-¹H). [Chem 20]

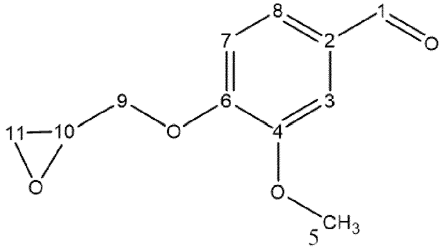

**[Table 1]**

| N° | δ ¹H (ppm) | δ ¹³C (ppm) |
|---|---|---|
| 1 | 9.80 | 190.9 |
| 2 | / | 130.6 |
| 3 | 7.36 | 109.4 |
| 4 | / | 149.9 |
| 5 | 3.88 | 56.0 |
| 6 | / | 153.3 |
| 7 | 6.97 | 112.2 |
| 8 | 7.38 | 126.5 |
| 9 | 4.04 et 4.33 | 69.9 |
| 10 | 3.37 | 49.8 |
| 11 | 2.73 et 2.88 | 44.7 |

| | | |
|---|---|---|
| Solvant CDCl₃ | | |

### 2.1.2 Etape 2 : Synthèse de l'oxime 3-méthoxy-4-(oxiran-2-ylméthoxy)benzaldéhyde

A une suspension du 3-méthoxy-4-(oxiran-2-ylméthoxy)benzaldéhyde (4,253g; 20,43 mmol) dans l'éthanol (100 ml), est ajouté à température ambiante (23°C) une solution d'acétate de sodium (2,51g; 30,6 mmol soit 1,5 eq.) et d'hydrochlorure d'hydroxylamine (2,129g; 30,6 mmol soit 1,5 eq.) dans de l'eau distillée (100 ml). Après une solubilisation complète en 40-50 secondes, on observe une légère exothermicité au sein du milieu réactionnel. Un nouveau précipité se forme en quelques minutes. Le mélange réactionnel est ensuite agité à température ambiante pendant 90 minutes. Puis, on ajoute de la glace pilée (100 g) et le milieu est maintenu sous agitation jusqu'à fusion complète de la glace pilée. Le précipité est enfin filtré, lavé par un excès d'eau et séché à l'air.

Un solide blanc (3,604g; 16,14 mmol; rendement 79 %) est obtenu. La pureté molaire est supérieure à 89% (RMN-¹H). [Chem 21]

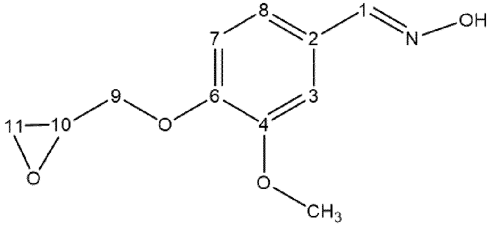

**[Table 2]**

| N° | δ ¹H (ppm) | δ ¹³C (ppm) |
|---|---|---|
| 1 | 8.00 | 150.2 |
| 2 | / | 126.0 |
| 3 | 6.95 | 121.5 |
| 4 | 6.86 | 113.6 |
| 5 | / | 149.9 |
| 6 | / | 150.0 |
| 7 | 7.17 | 108.9 |
| 8 | 3.84 | 56.0 |
| 9 | 4.00 et 4.22 | 70.2 |
| 10 | 3.33 | 50.1 |
| 11 | 2.69 et 2.84 | 44.9 |

### Solvant : CDCl₃

### 2.1.3 Etape 3 : Synthèse du N-oxyde de 3-méthoxy-4-(oxiran-2-ylmethoxy) benzonitrile

A une suspension de l'oxime de 3-méthoxy-4-(oxiran-2-ylméthoxy)benzaldéhyde (10,15g; 45,5 mmol) dans du dichlorométhane (100 ml) refroidie jusqu'à 0-3°C, est additionnée au goutte à goutte une solution d'eau de Javel (98,5 ml; 4% du chlore actif) (eau de Javel= hypochlorite de sodium) pendant 20-25 minutes. Le milieu réactionnel est ensuite agité pendant 80-90 minutes entre 0 et 5°C. Puis, la phase organique est séparée, lavée par de l'eau (2 x 50 ml) et enfin évaporée sous pression réduite (T bain = 25°C ; 10 mbar) pour conduire un solide beige. Ce solide est ensuite resolubilisé dans du dichlorométhane (~100 ml). La solution obtenue précédemment est ensuite filtrée sur couche de SiO₂ (environ 4-5 cm d'épaisseur) en éluant par du dichlorométhane (2 x 30 ml). Le perméat est enfin concentré sous pression réduite (T bain = 25°C ; 10 mbar) pour conduire à un solide blanc obtenu avec un rendement de 71 % (7,126g; 32,2 mmol). La pureté molaire est 95 % (RMN-¹H).

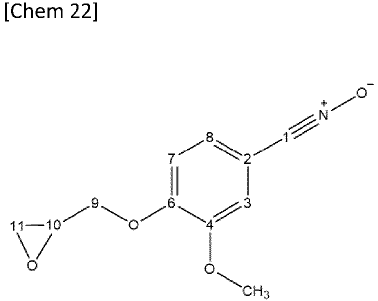

**[Table 3]**

| N° | δ ¹H (ppm) | δ ¹³C (ppm) |
|---|---|---|
| 1 | / | / |
| 2 | / | 106.1 |
| 3 | 7.04 | 125.8 |
| 4 | 6.87 | 114.0 |
| 5 | / | 150.7 |
| 6 | / | 150.0 |
| 7 | 6.92 | 115.0 |
| 8 | 3.82 | 56.2 |
| 9 | 3.98 et 4.27 | 70.2 |
| 10 | 3.32 | 49.9 |
| 11 | 2.69 et 2,85 | 44.7 |

| | | |
|---|---|---|
| Solvant : CDCl₃ | | |

### 2.2. Synthèse de l'oxyde de 2-(glycidyloxy)-1-naphtonitrile (Composé B)

L'oxyde de 2-(glycidyloxy)-1-naphtonitrile, composé B, est synthétisé selon le mode opératoire décrit dans la demande de brevet US2012/0046418A1 paragraphes [0033] à [0037]. [Chem 23]

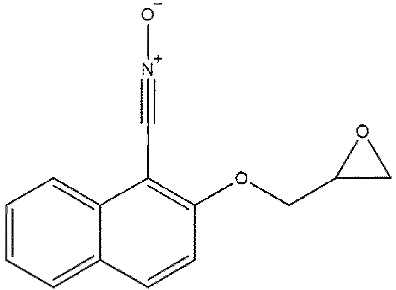

### 2.3 Synthèse de l'oxyde 2,4,6-triméthyl-3-(oxiran-2-ylmthoxy)benzonitrile (Composé C)

L'oxyde 2,4,6-triméthyl-3-(oxiran-2-ylmthoxy)benzonitrile, composé C, est synthétisé selon le schéma réactionnel et le procédé de synthèse décrits ci-dessous et issu des exemples du document WO2019102128 : [Chem 24]

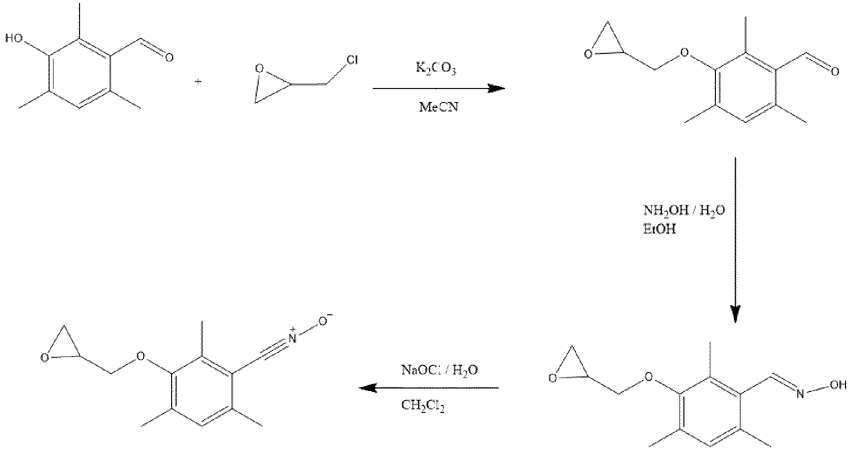

### 2.3.1. Synthèse de 2,4,6-triméthyl-3-(oxiran-2-ylméthoxy)benzaldéhyde :

A un mélange de 3-hydroxy-2,4,6-triméthylbenzaldéhyde (40,00 g ; 0,244 mol) et d'épichlorohydrine (56,35 g ; 0,609 mol) dans l'acétonitrile (100 ml) est ajouté le carbonate de potassium (50,50 g ; 0,365 mol). Le milieu réactionnel est agité pendant 3 heures à 60°C et est ensuite agité pendant 2,5-3 heures à 70°C. Après retour à 40-50°C, le mélange réactionnel est dilué avec un mélange d'eau (250ml) et d'éthylacétate (250 ml), puis maintenu sous agitation pendant 10 minutes. La phase organique est séparée et lavée avec de l'eau (4 fois par 125 ml). Le solvant est évaporé sous pression réduite (T bain 37°C ; 40 mbar). Une huile rouge (66,43 g) est obtenue.

Le produit secondaire de la réaction, le 3,3'-((2-hydroxypropane-1,3-diyl)bis(oxy))bis(2,4,6-triméthylbenzaldéhyde) est séparé du 2,4,6-triméthyl-3-(oxiran-2-ylméthoxy)benzaldéhyde par chromatographie sur colonne de silice (éluent : éthylacétate / éther de pétrole = 1 / 4 en volume). Après récupération des fractions contenant le 2,4,6-triméthyl-3-(oxiran-2-ylméthoxy)benzaldéhyde, les solvants sont évaporés sous pression réduite (T bain 36°C ; 21 mbar). De l'éther de pétrole (120 ml) est ajouté au résidu et la suspension est maintenue sous agitation à -18°C pendant 2 heures. Le précipité est filtré et lavé sur le filtre avec de l'éther de pétrole (40/60) (3 fois 25 ml) et enfin séché pendant 10-15 heures sous pression atmosphérique à température ambiante. Un solide blanc (40,04 g ; rendement massique de 75 %) avec un point de fusion de 52°C est obtenu. La pureté molaire est supérieure à 99 % (RMN ¹H). [Chem 25]

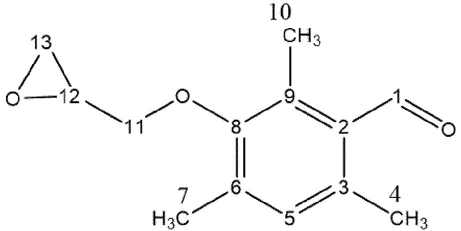

**[Table 4]**

| | δ ¹H (ppm) | δ ¹³C (ppm) |
|---|---|---|
| 1 | 10.37 | 193.3 |
| 2 | / | 131.1 |
| 3 | / | 132.8 |
| 4 | 2.4 | 19.2 |
| 5 | 6.94 | 131.3 |
| 6 | / | 136.3 |
| 7 | 2.2 | 16.1 |
| 8 | / | 153.4 |
| 9 | / | 135.7 |
| 10 | 2.4 | 11.7 |
| 11 | 3.50/4.00 | 73.4 |
| 12 | 3.29 | 49.6 |
| 13 | 2.60/2.76 | 42.9 |

| | | |
|---|---|---|
| Solvant DMSO | | |

### 2.3.2 Synthèse de l'oxime 2,4,6-triméthyl-3-(oxiran-2-ylmethoxy)benzaldéhyde:

A une solution de 2,4,6-triméthyl-3-(oxiran-2-ylméthoxy)benzaldéhyde (46,70 g ; 0,212 mol) dans l'alcool éthylique (750 ml) est ajoutée à température ambiante une solution d'hydroxylamine (16,81 g ; 0,254 mol, 50 % dans l'eau, Aldrich) dans l'alcool éthylique (75 ml). Le milieu réactionnel est agité pendant 3 heures à 23°C (T bain), Après évaporation du solvant (T bain = 24°C ; 35 mbar), de l'éther de pétrole (40/60) (150 ml) est ajouté. Le précipité est filtré et lavé sur le filtre par l'éther de pétrole (100 ml). Le produit brut est solubilisé dans un mélange d'acétate d'éthyle (650 ml) et d'éther de pétrole (650 ml) à température ambiante et cette solution est filtrée sur une couche de silicagel (Ø 9 cm, 2,0 cm de SiO₂).

Les solvants sont évaporés (T bain = 22-24°C) et l'oxime 2,4,6-triméthyl-3-(oxiran-2-ylmethoxy)benzaldéhyde est séché sous pression atmosphérique à température ambiante. Un solide blanc (43,81 g ; rendement massique de 88 %) avec un point de fusion de 77 °C est obtenu. La pureté molaire est supérieure à 99 % (RMN ¹H). [Chem 26]

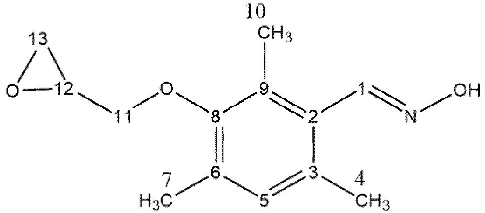

**[Table 5]**

| | δ ¹H (ppm) | δ ¹³C (ppm) |
|---|---|---|
| 1 | 8.2 | 147.3 |
| 2 | / | 129.1 |
| 3 | / | 129.2 |
| 4 | 2.18 | 20.1 |
| 5 | 6.85 | 130.2 |
| 6 | / | 130.3 |
| 7 | 2.15 | 15.7 |
| 8 | / | 153.1 |
| 9 | / | 131.7 |
| 10 | 2.18 | 13.1 |
| 11 | 3.48/3.96 | 73.3 |
| 12 | 3.27 | 49.6 |
| 13 | 2.60/2.76 | 42.8 |

| | | |
|---|---|---|
| Solvant DMSO | | |

### 2.3.3 Synthèse de l'oxyde 2,4,6-triméthyl-3-(oxiran-2-ylméthoxy)benzonitrile (composé C) :

A une solution d'oxime 2,4,6-triméthyl-3-(oxiran-2-ylméthoxy)benzaldéhyde (17,00 g ; 0,072 mol) dans du dichlorométhane (350 ml) refroidie jusqu'à 3°C est ajoutée au goutte à goutte une solution aqueuse de NaOCl dans l'eau (62,9 g Cl actif/l) (126 ml) pendant 10-15 minutes. La température du milieu réactionnel reste comprise entre 3 et 5°C. Le milieu réactionnel est ensuite agité pendant 1 heure à température 3-5°C. La phase aqueuse est séparée et extraite avec du dichlorométhane (25 ml). Les phases organiques réunies sont lavées avec de l'eau (3 fois 75 ml). Le solvant est évaporé à pression réduite (T bain = 22°C, 35 mbar). A ce résidu est additionné de l'éther de pétrole (40/60) (90 ml) et la suspension est maintenue sous agitation à température ambiante pendant 10-12 heures. Le précipité est filtré et lavé sur le filtre avec de l'éther de pétrole (3 fois par 30 ml) et enfin séché pendant 10-15 heures sous pression atmosphérique à température ambiante. Un solide blanc (15,12 g, rendement massique de 90 %) avec un point de fusion de 63°C est obtenu. La pureté molaire est supérieure à 99 % (RMN ¹H). [Chem 27]

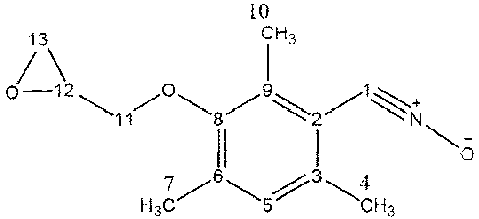

**[Table 6]**

| | δ 1H (ppm) | δ 13C (ppm) |
|---|---|---|
| 1 | 2.59/2.76 | 43.0 |
| 2 | 3.28 | 49.6 |
| 3 | 3.51/4.03 | 73.5 |
| 4 | / | 153.0 |
| 5 | / | 136.3 |
| 6 | 2.27 | 14.3 |
| 7 | / | 111.7 |
| 8 | / | / |
| 9 | / | 134.4 |
| 10 | 2.18 | 15.9 |
| 11 | 7.01 | 129.9 |
| 12 | / | 134.0 |
| 13 | 2.27 | 19.5 |

### 3. Obtention des élastomères diéniques modifiés

### 3.1 Caoutchouc naturel modifié avec le composé A (polymère selon l'invention)

On incorpore 0,98 pce de l'oxyde de 3-méthoxy-4-(oxiran-2-ylméthoxoy)benzonitrile (soit une fraction molaire de 0,3 % mol), composé A obtenu selon le procédé décrit au paragraphe 2.1, de pureté RMN supérieure à 89 % mol, à 100 g de caoutchouc naturel sur un outil à cylindres (mélangeur externe à 30°C). Le mélange est homogénéisé quinze fois sur cet outil, puis mis en forme de plaques, avant de subir un traitement thermique à 100°C pendant 10 min sous presse à 10 bars de pression. L'analyse par RMN ¹H a permis de déterminer un taux molaire de greffage inférieur à 0,100 % mol avec un rendement molaire de greffage inférieur à 33 %.

### 3.2 Caoutchouc naturel modifié avec le composé B

On incorpore 1,06 pce d'oxyde de 2-(glycidyloxy)-1-naphtonitrile (soit une fraction molaire de 0,3 % mol), de pureté RMN de 95 % mol, composé B obtenu selon le procédé du paragraphe 2.2, à 100 g de caoutchouc naturel sur un outil à cylindres (mélangeur externe à 30°C). Le mélange est homogénéisé quinze fois sur cet outil, puis mis en forme de plaques avant de subir un traitement thermique à 100°C pendant 10 min sous presse à 10 bars de pression. L'analyse par RMN ¹H a permis de déterminer un taux molaire de greffage de 0,162 % mol avec un rendement molaire de greffage de 54 %.

### 3.3 Caoutchouc naturel modifié avec le composé C

On incorpore 1,03 pce d'oxyde 2,4,6-triméthyl-3-(oxiran-2-ylméthoxy)benzonitrile (soit une fraction molaire de 0,3 % mol), de pureté RMN de 99 % mol, composé C obtenu selon le procédé du paragraphe 2.3, à 100 g de caoutchouc naturel sur un outil à cylindres (mélangeur externe à 30°C). Le mélange est homogénéisé quinze fois sur cet outil, puis mis en forme de plaques avant de subir un traitement thermique à 100°C pendant 10 min sous presse à 10 bars de pression. L'analyse par RMN ¹H a permis de déterminer un taux molaire de greffage de 0,070 % mol avec un rendement molaire de greffage de 23 %.

### 3.4 Polyisoprène de synthèse modifié avec le composé A (polymère selon l'invention)

On incorpore 0,98 pce de l'oxyde de 3-méthoxy-4-(oxiran-2-ylméthoxoy)benzonitrile (soit une fraction molaire de 0,3 % mol), composé A obtenu selon le procédé décrit au paragraphe 2.1, de pureté RMN supérieure à 89 % mol, à 100 g de polyisoprène de synthèse (contenant 99,35% en poids d'unité isoprène-1,4 cis et 0,65 % en poids d'unité isoprène 3,4 ; Mn=375000 g/mol et Ip=3,6 mesurés selon la méthode décrite ci-dessus) sur un outil à cylindres (mélangeur externe à 30°C). Le mélange est homogénéisé quinze fois sur cet outil, puis mis en forme de plaques avant de subir un traitement thermique à 100°C pendant 10 min sous presse à 10 bars de pression. L'analyse par RMN ¹H a permis de déterminer un taux molaire de greffage de 0,150 % mol avec un rendement molaire de greffage de 50 %.

### 3.5 Polyisoprène de synthèse modifié avec le composé B

On incorpore 1,06 pce d'oxyde de 2-(glycidyloxy)-1-naphtonitrile (soit une fraction molaire de 0,3 % mol), de pureté RMN de 95 %mol, composé B obtenu selon le procédé du paragraphe 2.2, à 100 g de polyisoprène de synthèse (contenant 99,35% en poids d'unité isoprène-1,4 cis et 0,65 % en poids d'unité isoprène 3,4 ; Mn=375000 g/mol et Ip=3,6 mesurés selon la méthode décrite ci-dessus) sur un outil à cylindres (mélangeur externe à 30°C). Le mélange est homogénéisé quinze fois sur cet outil, puis mis en forme de plaques avant de subir un traitement thermique à 100°C pendant 10 min sous presse à 10 bars de pression. L'analyse par RMN ¹H a permis de déterminer un taux molaire de greffage de 0,145 % mol avec un rendement molaire de greffage de 48 %.

### 3.6 Polyisoprène de synthèse modifié avec le composé C

On incorpore 1,03 pce d'oxyde 2,4,6-triméthyl-3-(oxiran-2-ylméthoxy)benzonitrile (soit une fraction molaire de 0,3 % mol), de pureté RMN de 99 % mol, composé C obtenu selon le paragraphe 2.3, à 100 g de polyisoprène de synthèse (contenant 99,35% en poids d'unité isoprène-1,4 cis et 0,65 % en poids d'unité isoprène 3,4 ; Mn=375000 g/mol et Ip=3,6 mesurés selon la méthode décrite ci-dessus) sur un outil à cylindres (mélangeur externe à 30°C). Le mélange est homogénéisé quinze fois sur cet outil, puis mis en forme de plaques avant de subir un traitement thermique à 100°C pendant 10 min sous presse à 10 bars de pression. L'analyse par RMN ¹H a permis de déterminer un taux molaire de greffage de 0,200 % mol avec un rendement molaire de greffage de 67 %.

### 4. Ingrédients utilisés dans les compositions élastomériques

(1) Silice « Zeosil 1165MP » commercialisée par Solvay ;
(2) Bis[3-(triéthoxysilyl)propyl] tétrasulfure silane (TESPT) commercialisé par Evonik sous la référence « Si69 » ;
(3) Noir de carbone de grade N234 commercialisé par Cabot Corporation ;
(4) N-1,3-diméthylbutyl-N-phenyl-para-phénylènediamine commercialisé par Flexys sous la référence « Santoflex 6-PPD » ;
(5) 2,2,4-triméthyl-1,2-dihydroquinoline commercialisée par la société Flexys ;
(6) Oxyde de Zinc (grade industriel) commercialisé par la société Umicore ;
(7) Stéarine « Pristerene 4031 » commercialisée par la société Uniquema ;
(8) N-cyclohexyl-2-benzothiazyl-sulfénamide commercialisé par Flexys sous la référence « Santocure CBS » ;
(9) caoutchouc naturel modifié par le composé B, obtenu selon le procédé décrit au paragraphe 3.2 ;
(10) caoutchouc naturel modifié par le composé C, obtenu selon le procédé décrit au paragraphe 3.3 ;
(11) caoutchouc naturel modifié par le composé A, obtenu selon le procédé décrit au paragraphe 3.1 ;
(12) polyisoprène de synthèse modifié par le composé B, obtenu selon le procédé décrit au paragraphe 3.5 ;
(13) polyisoprène de synthèse modifié par le composé C, obtenu selon le procédé décrit au paragraphe 3.6 ;
(14) polyisoprène de synthèse modifiée par le composé A, obtenu selon le procédé décrit au paragraphe 3.4 .

### 5. Essai 1

Cet essai a pour objet de montrer l'amélioration compromis de performance d'une composition élastomérique comprenant du caoutchouc naturel modifié par le composé A (composition C3, selon l'invention) par rapport à une composition élastomérique témoin (composition T1) et à deux compositions élastomériques comparatives (composition C1 et C2).

Le taux des différents constituants de ces compositions exprimés en pce, partie en poids pour cent parties en poids d'élastomère, sont présentés dans le tableau 7.

**[Table 7]**

| | T1 | C1 | C2 | C3 |
|---|---|---|---|---|
| Caoutchouc naturel non modifié | 100 | (-) | (-) | (-) |
| Caoutchouc naturel modifié avec le composé B (9) | (-) | 100 | (-) | (-) |
| Caoutchouc naturel modifié avec le composé C (10) | (-) | (-) | 100 | (-) |

| Caoutchouc naturel modifié avec le composé A (11) | (-) | (-) | (-) | 100 |
|---|---|---|---|---|
| Charge renforçante (1) | 55 | 55 | 55 | 55 |
| Agent de couplage (2) | 5,5 | 5,5 | 5,5 | 5,5 |
| Noir de carbone (3) | 3 | 3 | 3 | 3 |
| Antioxydant (4) | 1,5 | 1,5 | 1,5 | 1,5 |
| TMQ (5) | 1 | 1 | 1 | 1 |
| Paraffine | 1 | 1 | 1 | 1 |
| ZnO (6) | 2,7 | 2,7 | 2,7 | 2,7 |
| Acide stéarique (7) | 2,5 | 2,5 | 2,5 | 2,5 |
| CBS (8) | 1,63 | 1,63 | 1,63 | 1,63 |
| Soufre | 1,33 | 1,33 | 1,33 | 1,33 |

Les compositions élastomériques T1, C1 à C3 sont préparées de la manière suivante : on introduit dans un mélangeur interne « Polylab » de 85 cm³, rempli à 70 % et dont la température initiale de cuve est d'environ 100°C, le caoutchouc naturel modifié par le composé B ou modifié par le composé C ou modifié par le composé A ou le caoutchouc naturel non modifié.

Ensuite, pour chacune des compositions élastomériques, on introduit la ou les charges renforçantes, l'agent de couplage de la charge avec l'élastomère diénique, puis après une à deux minutes de malaxage, les divers autres ingrédients à l'exception du système de vulcanisation. On conduit alors un travail thermomécanique (phase non-productive) en une étape, qui dure au total environ 5 à 6 minutes, jusqu'à atteindre une température maximale de tombée de 160°C.

On récupère le mélange ainsi obtenu, on le refroidit puis on ajoute le système de vulcanisation (soufre et l'accélérateur type sulfénamide) sur un mélangeur externe (homo-finisseur) à 25°C, en mélangeant l'ensemble (phase productive) pendant environ 5 à 6 minutes.

Les compositions élastomériques ainsi obtenues sont ensuite calandrées sous la forme de plaques (épaisseur de 2 à 3 mm) pour la mesure de leurs propriétés physiques ou mécaniques.

Les propriétés de caoutchouterie de ces compositions sont mesurées après cuisson à 150°C pendant 30 minutes. Les résultats obtenus sont portés dans le tableau 8.

**[Table 8]**

| Compositions | T1 | C1 | C2 | C3 |
|---|---|---|---|---|
| MA300/MA100 à 23°C (en base 100) | 100 | 125 | 99 | 133 |
| MA300/MA100 à 100°C (en base 100) | 100 | 125 | 107 | 129 |
| Tan (δ)_{max à 60 C°} (en base 100) | 100 | 74 | 93 | 65 |
| G*_{50% retour à 60°C} (en base 100) | 100 | 101 | 99 | 104 |

La composition élastomérique de l'invention C3 présente simultanément, par rapport aux compositions élastomériques témoin T1 et comparatives C1 et C2, une amélioration significative de l'indice de renforcement (MA300/M100) et une amélioration du compromis de performances résistance au roulement /rigidité (baisse de tan(δ)_{max à 60 C°} et augmentation de G*_{50%} retour à 60°C).

### 5. Essai 2

Cet essai a pour objet de montrer l'amélioration compromis de performance d'une composition élastomérique comprenant un polyisoprène de synthèse modifié par le composé A (composition C6 selon l'invention) par rapport à une composition élastomérique témoin (composition T2) et à deux compositions élastomériques comparatives (composition C4 et C5).

Le taux des différents constituants de ces compositions élastomériques exprimés en pce, partie en poids pour cent parties en poids d'élastomère, sont présentés dans le tableau 9.

**[Table 9]**

| | T2 | C4 | C5 | C6 |
|---|---|---|---|---|
| Polyisoprène de synthèse non modifié | 100 | (-) | (-) | (-) |
| Polyisoprène de synthèse modifié avec le composé B (12) | (-) | 100 | (-) | (-) |
| Polyisoprène de synthèse modifié avec le composé C (13) | (-) | (-) | 100 | (-) |
| Polyisoprène de synthèse modifié avec le composé A (14) | (-) | | (-) | 100 |
| Charge renforçante (1) | 55 | 55 | 55 | 55 |
| Agent de couplage (2) | 5,5 | 5,5 | 5,5 | 5,5 |
| Noir de carbone (3) | 3 | 3 | 3 | 3 |
| Antioxydant (4) | 1,5 | 1,5 | 1,5 | 1,5 |
| TMQ (5) | 1 | 1 | 1 | 1 |
| Paraffine | 1 | 1 | 1 | 1 |
| ZnO (6) | 2,7 | 2,7 | 2,7 | 2,7 |
| Acide stéarique (7) | 2,5 | 2,5 | 2,5 | 2,5 |
| CBS (8) | 1,63 | 1,63 | 1,63 | 1,63 |
| Soufre | 1,33 | 1,33 | 1,33 | 1,33 |

Les compositions élastomériques T2, C4 à C6 sont préparées selon le procédé décrit ci-dessus pour les compositions élastomériques T1, C1 à C3.

Les propriétés de caoutchouterie de ces compositions élastomériques sont mesurées après cuisson à 150°C pendant 30 minutes. Les résultats obtenus sont portés dans le tableau 10.

**[Table 10]**

| Compositions | T2 | C4 | C5 | C6 |
|---|---|---|---|---|
| MA300/MA100 à 23°C (en base 100) | 100 | 124 | 124 | 154 |
| MA300/MA100 à 100°C (en base 100) | 100 | 116 | 112 | 152 |
| Tan (δ)_{max à 60 C°} (en base 100) | 100 | 60 | 90 | 60 |
| G*_{50% retour à 60°C} (en base 100) | 100 | 87 | 87 | 93 |

La composition élastomérique de l'invention C6 présente simultanément, par rapport aux compositions élastomériques témoin T2 et comparatives C4 et C5 une amélioration significative de l'indice de renforcement (MA300/M100) et une amélioration du compromis de performances résistance au roulement /rigidité (baisse de tan(δ)_{max à 60 C°} et augmentation de G*_{50%} retour à 60°C).

## Revendications

1. Polymère comprenant une ou plusieurs unités diéniques et portant le long de la chaîne polymère principale un ou plusieurs groupes pendants de formule (I) suivante : [Chem 28] 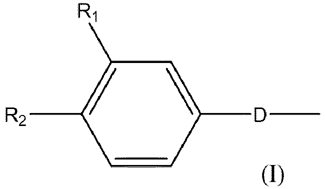 dans laquelle :
- D représente un groupe de rattachement à la chaîne polymère principale ;
- R₁ représente un groupement chimique choisi dans le groupe constitué par -OCH₃, -OCH₂CH₃ et -OR₃;
- R₂ représente un groupement chimique choisi dans le groupe constitué par -OCH₃ et -OR₃;
- à la condition que R₁ ou R₂ soit -OR₃ ;
- R₃ représente un groupement chimique de formule (II) [Chem 29] 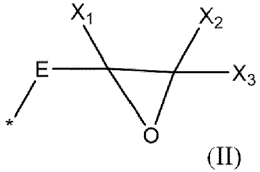
o dans laquelle E représente un groupe hydrocarboné divalent en C1-C12 comprenant éventuellement un ou plusieurs hétéroatomes ;
∘ X₁, X₂, X₃, identiques ou différents, représentent un atome d'hydrogène, un alkyle en C1-C6 ou un aryle en C6-C14 ;
∘ le symbole * représente le rattachement du groupement chimique de formule (II) à l'atome d'oxygène.

2. Polymère selon la revendication 1, dans lequel les groupes pendants sont répartis le long de la chaîne polymère principale de façon aléatoire.

3. Polymère selon l'une quelconque des revendications précédentes, dans lequel le taux de molaire des groupes pendants de formule (I) est compris dans un domaine allant de 0,05 % à 15 %, de préférence de 0,05 % à 10 %, plus préférentiellement de 0,07 % à 5 %.

4. Polymère selon l'une quelconque des revendications précédentes, dans lequel le polymère est un élastomère diénique.

5. Polymère selon l'une quelconque des revendications précédentes, dans lequel le polymère est choisi dans le groupe des élastomères constitué par les copolymères d'éthylène-propylène-monomère diène, les caoutchoucs butyle, le caoutchouc naturel, les polyisoprènes de synthèse, les polybutadiènes, les copolymères de butadiène, les copolymères d'isoprène et les mélanges de ces élastomères.

6. Polymère selon l'une quelconque des revendications précédentes, dans lequel R₁ représente un groupement chimique choisi dans le groupe constitué par -OCH₃ et - OCH₂CH₃ ; et R₂ est -OR₃.

7. Polymère selon l'une quelconque des revendications précédentes, dans lequel E représente un alcanediyle en C1-C12, de préférence un alcanediyle en C1-C10, plus préférentiellement un alcanediyle en C1-C9, de préférence E est choisi dans le groupe constitué par le méthanediyle, l'éthanediyle et le propanediyle.

8. Polymère selon l'une quelconque des revendications précédentes, dans lequel X₁, X₂, X₃, identiques ou différents, sont choisis dans le groupe constitué par l'atome d'hydrogène, les alkyles en C₁-C₆ et le phényle.

9. Polymère selon l'une quelconque des revendications précédentes, dans lequel les X₁, X₂, X₃, identiques, sont un atome d'hydrogène.

10. Polymère selon l'une quelconque des revendications précédentes, dans lequel le groupe pendant de formule (I) est le groupe pendant de formule (Ia1) [Chem 30]

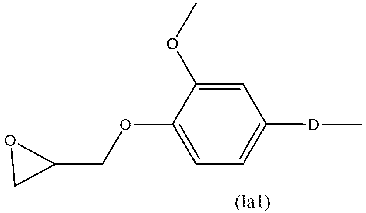

11. Polymère selon l'une quelconque des revendications précédentes, dans lequel le groupe de rattachement D résulte de la réaction d'une fonction oxyde de nitrile avec une unité diénique du polymère.

12. Procédé de préparation d'un polymère par modification d'un polymère diénique initial, ledit procédé comprenant une étape de greffage sur ledit polymère diénique par un composé dont est issu le groupe pendant de formule (I) tel que défini à l'une quelconque des revendication 1 à 10.

13. Composition élastomérique à base d'au moins un polymère défini à l'une quelconque des revendications 1 à 11 ou d'un polymère susceptible d'être obtenu par un procédé selon la revendication 12, d'au moins une charge renforçante et d'au moins un agent de réticulation.

14. Article semi-fini pour pneumatique comprenant au moins un polymère défini à l'une quelconque des revendications 1 à 11 ou d'un polymère susceptible d'être obtenu par un procédé selon la revendication 12 ou une composition selon la revendication 13.

15. Pneumatique comprenant au moins un polymère défini à l'une quelconque des revendications 1 à 11 ou d'un polymère susceptible d'être obtenu par un procédé selon la revendication 12 ou comprenant au moins une composition élastomérique définie à la revendication 13 ou au moins un article semi-fini pour pneumatique défini à la revendication 14.

## Patentansprüche

1. Polymer, das eine oder mehrere Dieneinheiten umfasst und entlang der Polymerhauptkette eine oder mehrere Seitengruppen mit der folgenden Formel (I) trägt: [Chem 28] 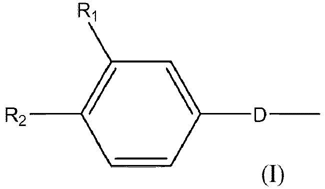 in der:
- D für eine Gruppe zur Verknüpfung mit der Polymerhauptkette steht;
- R₁ für eine chemische Gruppe steht, die aus der Gruppe bestehend aus -OCH₃, -OCH₂CH₃ und -OR₃ gewählt ist;
- R₂ für eine chemische Gruppe steht, die aus der Gruppe bestehend aus -OCH₃, -OR₃ gewählt ist;
- unter der Bedingung, dass R₁ oder R₂ -OR₃ ist;
- R₃ für eine chemische Gruppe mit der Formel (II) steht [Chem 29] 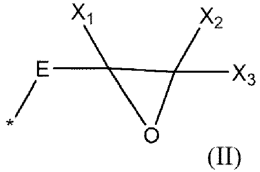
∘ in der E für eine zweiwertige C1-C12-Kohlenwasserstoffgruppe steht, die gegebenenfalls ein oder mehrere Heteroatome umfasst;
∘ X₁, X₂, X₃, die gleich oder verschieden sind, für ein Wasserstoffatom, ein C1-C6-Alkyl oder ein C6-C14-Aryl stehen;
∘ das Symbol * für die Verknüpfung der chemischen Gruppe mit der Formel (II) mit dem Sauerstoffatom steht.

2. Polymer nach Anspruch 1, wobei die Seitengruppen entlang der Polymerhauptkette zufällig verteilt sind.

3. Polymer nach einem der vorhergehenden Ansprüche, wobei der molare Anteil der Seitengruppen mit der Formel (I) in einem Bereich von 0,05 % bis 15 %, bevorzugt von 0,05 % bis 10 %, noch weiter bevorzugt von 0,07 % bis 5 % liegt.

4. Polymer nach einem der vorhergehenden Ansprüche, wobei das Polymer ein Dienelastomer ist.

5. Polymer nach einem der vorhergehenden Ansprüche, wobei das Polymer aus der Gruppe der Elastomere bestehend aus den Ethylen-Propylen-Dienmonomer-Copolymeren, den Butylkautschuken, dem Naturkautschuk, den synthetischen Polyisoprenen, den Polybutadienen, den Butadien-Copolymeren, den Isopren-Copolymeren und den Mischungen dieser Elastomere gewählt ist.

6. Polymer nach einem der vorhergehenden Ansprüche, wobei R₁ für eine chemische Gruppe steht, die aus der Gruppe bestehend aus -OCH₃ und -OCH₂CH₃ gewählt ist; und R₂ -OR₃ ist.

7. Polymer nach einem der vorhergehenden Ansprüche, wobei E für ein C1-C12-Alkandiyl, bevorzugt ein C1-C10-Alkandiyl, noch weiter bevorzugt ein C1-C9-Alkandiyl steht, E bevorzugt aus der Gruppe bestehend aus Methandiyl, Ethandiyl und Propandiyl gewählt ist.

8. Polymer nach einem der vorhergehenden Ansprüche, wobei X₁, X₂, X₃, die gleich oder verschieden sind, aus der Gruppe bestehend aus dem Wasserstoffatom, den C₁-C₆-Alkylen und dem Phenyl gewählt sind.

9. Polymer nach einem der vorhergehenden Ansprüche, wobei X₁, X₂, X₃, die gleich sind, ein Wasserstoffatom sind.

10. Polymer nach einem der vorhergehenden Ansprüche, wobei die Seitengruppe mit der Formel (I) die Seitengruppe mit der Formel (Ia1) ist [Chem 30]

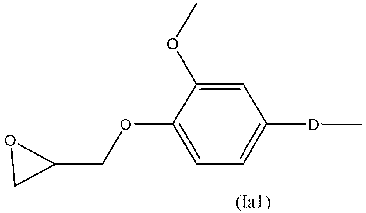

11. Polymer nach einem der vorhergehenden Ansprüche, wobei die Gruppe zur Verknüpfung D aus der Reaktion einer Nitriloxidfunktion mit einer Dieneinheit des Polymers resultiert.

12. Verfahren zur Herstellung eines Polymers durch Modifikation eines ursprünglichen Dienpolymers, wobei das Verfahren einen Schritt des Aufpfropfens einer Verbindung auf das Dienpolymer umfasst, aus der die Seitengruppe mit der Formel (I) wie in einem der Ansprüche 1 bis 10 definiert hervorgegangen ist.

13. Elastomerzusammensetzung auf Basis mindestens eines in einem der Ansprüche 1 bis 11 definierten Polymers oder eines Polymers, das mit einem Verfahren nach Anspruch 12 erhalten werden kann, mindestens eines verstärkenden Füllstoffs und mindestens eines Vernetzungsmittels.

14. Halbzeug für Reifen, umfassend mindestens ein in einem der Ansprüche 1 bis 11 definiertes Polymer oder ein Polymer, das mit einem Verfahren nach Anspruch 12 erhalten werden kann, oder eine Zusammensetzung nach Anspruch 13.

15. Reifen, umfassend mindestens ein in einem der Ansprüche 1 bis 11 definiertes Polymer oder ein Polymer, das mit einem Verfahren nach Anspruch 12 erhalten werden kann, oder umfassend mindestens eine in Anspruch 13 definierte Zusammensetzung oder mindestens ein in Anspruch 14 definiertes Halbzeug für Reifen.

## Claims

1. Polymer comprising one or more diene units and bearing along the main polymer chain one or more pendent groups of the following formula (I): [Chem 28] 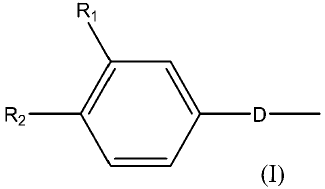 in which:
- D represents a group of attachment to the main polymer chain;
- R₁ represents a chemical group selected from the group consisting of -OCH₃,-OCH₂CH₃ and -OR₃;
- R₂ represents a chemical group selected from the group consisting of -OCH₃ and -OR₃;
- provided that R₁ or R₂ is -OR₃;
- R₃ represents a chemical group of formula (II) [Chem 29] 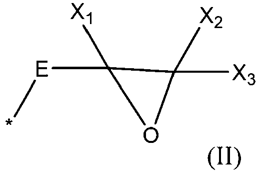
∘ in which E represents a divalent C1-C12 hydrocarbon group optionally comprising one or more heteroatoms;
∘ X₁, X₂, X₃, which may be identical or different, represent a hydrogen atom, a C1-C6 alkyl or a C6-C14 aryl;
∘ the symbol * represents the attachment of the chemical group of formula (II) to the oxygen atom.

2. Polymer according to Claim 1, in which the pendent groups are randomly distributed along the main polymer chain.

3. Polymer according to either one of the preceding claims, in which the molar content of pendent groups of formula (I) is within a range extending from 0.05% to 15%, preferably from 0.05% to 10%, more preferentially from 0.07% to 5%.

4. Polymer according to any one of the preceding claims, in which the polymer is a diene elastomer.

5. Polymer according to any one of the preceding claims, in which the polymer is selected from the group of elastomers consisting of ethylene/propylene/diene monomer copolymers, butyl rubbers, natural rubber, synthetic polyisoprenes, polybutadienes, butadiene copolymers, isoprene copolymers, and mixtures of these elastomers.

6. Polymer according to any one of the preceding claims, in which R₁ represents a chemical group selected from the group consisting of -OCH₃ and -OCH₂CH₃; and R₂ is -OR₃.

7. Polymer according to any one of the preceding claims, in which E represents a C1-C12 alkanediyl, preferably a C1-C10 alkanediyl, more preferentially a C1-C9 alkanediyl; preferably E is selected from the group consisting of methanediyl, ethanediyl and propanediyl.

8. Polymer according to any one of the preceding claims, in which X₁, X₂, X₃, which may be identical or different, are selected from the group consisting of a hydrogen atom, C₁-C₆ alkyls and phenyl.

9. Polymer according to any one of the preceding claims, in which X₁, X₂, X₃, which are identical, are a hydrogen atom.

10. Polymer according to any one of the preceding claims, in which the pendent group of formula (I) is the pendent group of formula (Ia1) [Chem 30]

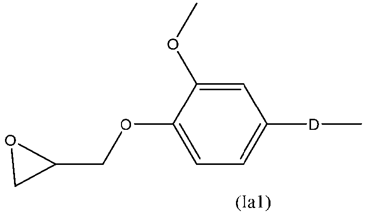

11. Polymer according to any one of the preceding claims, in which the attachment group D results from the reaction of a nitrile oxide function with a diene unit of the polymer.

12. Process for preparing a polymer by modification of an initial diene polymer, said process comprising a step of grafting on said diene polymer with a compound from which is derived the pendent group of formula (I) as defined in any one of Claims 1 to 10.

13. Elastomeric composition based on at least one polymer defined in any one of Claims 1 to 11 or on a polymer capable of being obtained by a process according to Claim 12, on at least one reinforcing filler and on at least one crosslinking agent.

14. Semi-finished article for a tyre comprising at least one polymer defined in any one of Claims 1 to 11 or a polymer capable of being obtained by a process according to Claim 12 or a composition according to Claim 13.

15. Tyre comprising at least one polymer defined in any one of Claims 1 to 11 or a polymer capable of being obtained by a process according to Claim 12 or comprising at least one elastomeric composition defined in Claim 13 or at least one semi-finished article for a tyre defined in Claim 14.
